# EUROPÄISCHE PATENTSCHRIFT

(11) **EP 2 874 939 B1**
(45) Veröffentlichungstag und Bekanntmachung des Hinweises auf die Patenterteilung: **04.11.2020**
(21) Anmeldenummer: 13736843.7
(22) Anmeldetag: 03.07.2013
(51) Int. Cl.: B67C 7/00, B29C 49/42

(54) **MODULARE PRODUKTIONSANLAGE UND VERFAHREN ZUM HERSTELLEN UND/ODER ABFÜLLEN VON BEHÄLTERN**
MODULAR SYSTEM AND METHOD FOR PRODUCING AND/OR FILLING OF CONTAINERS
DISPOSITIF MODULAIRE ET METHODE POUR LA PRODUCTION ET/OU LA REMPLISSAGE DES RECIPIENTS

(30) Priorität: 23.07.2012 DE 102012212882
(43) Veröffentlichungstag der Anmeldung: 27.05.2015
(73) Patentinhaber: KRONES Aktiengesellschaft, 93073 Neutraubling (DE)
(72) Erfinder: HAUSLADEN, Wolfgang, 93073 Neutraubling (DE); STOIBER, Christian, 93073 Neutraubling (DE); HAHN, Wolfgang, 93073 Neutraubling (DE); KAISER, Alexander, 93073 Neutraubling (DE); ZÖLFL, Markus, 93073 Neutraubling (DE); WINZINGER, Frank, 93073 Neutraubling (DE); RAITH, Stefan, 93073 Neutraubling (DE)
(74) Vertreter: Grünecker Patent- und Rechtsanwälte PartG mbB
(86) Internationale Anmeldenummer: PCT/EP2013/064057
(87) Internationale Veröffentlichungsnummer: WO 2014/016091

(56) Entgegenhaltungen:
- EP-A1- 0 414 031
- EP-A1- 1 449 778
- EP-A1- 1 645 340
- EP-A1- 2 292 550
- EP-A1- 2 471 728
- WO-A1-2010/081512
- WO-A1-2011/027372
- DE-A1- 3 238 332
- DE-A1- 10 154 203
- DE-A1- 19 921 274
- DE-A1-102005 015 565
- DE-C- 204 638
- US-A- 2 085 410
- US-A- 2 215 702
- US-A- 4 927 205
- "PET Technology for the markets of tomorrow", Krones AG , 1. September 2004 (2004-09-01), XP002715065, Gefunden im Internet: URL:http://transportexpo.ru/file2/krones/p et-technology_e.pdf [gefunden am 2013-10-17]
- "Used Machines, Sidel SBO 1", Sidel Group , 1995, XP002715066, Gefunden im Internet: URL:http://www.sachimolds.net/reheat_stret ch_blow_moulding.php [gefunden am 2013-10-17]

## Beschreibung

Die Erfindung betrifft eine Produktionsanlage zum Herstellen und/oder Abfüllen von Behältern, insbesondere Getränkeflaschen, sowie ein Verfahren zum Herstellen und/oder Abfüllen von Behältern in der erfindungsgemäßen Produktionsanlage.

Bekanntermaßen sind in Abfüllanlagen einzelnen Arbeitsschritten separate Behandlungseinheiten zugeordnet, die beispielsweise als Module eines gemeinsamen Anlagenkonzepts zusammen gestellt werden können. Hierbei werden üblicherweise Schnittstellen zur Steuerung der Anlage, zur Medienversorgung oder dergleichen vereinheitlicht, um die Kombination von Behandlungseinheiten unterschiedlicher Typen und/oder Produktionskapazitäten zu vereinfachen und die dadurch Kosten für die Anschaffung und den Betrieb der Anlagen zu reduzieren.

Die DE 199 21 274 A1 beschreibt beispielsweise eine Abfüllanlage für Behälter mit modularen Behandlungseinheiten, die jeweils wenigstens ein stationäres Arbeitsmodul zum Behandeln der Behälter umfassen. Ferner sind Handhabungseinrichtungen in Form eines jeweils zugeordneten Einzugs, Ausstoßes und einer Hubstange vorhanden, um die Behälter zwischen einem Behältereingang und einem Behälterausgang der Behandlungseinheit zu handhaben und vorübergehend im Arbeitsmodul zur Plasmasterilisation zu positionieren. Die Behandlungseinheiten sind gleichartig ausgebildet, so dass sich die Behälter mittels einzelner Abzweigungen von einem Förderband gezielt auf die Behandlungseinheiten verteilen lassen. Damit offenbart DE 199 21 274 A1 eine Produktionsanlage zum Abfüllen von Behältern, mit modularen Behandlungseinheiten, die jeweils umfassen:
- stationäre Arbeitsmodule zum Behandeln (Sterilisieren, Befüllen und Verschließen) der Behälter; und
- Handhabungseinrichtungen zum Handhaben der Behälter zwischen einem Behältereingang der Behandlungseinheit und einem Behälterausgang der Behandlungseinheit und zum Positionieren der Behälter im Arbeitsmodul,
wobei wenigstens zwei gleichartige Behandlungseinheiten vorgesehen sind, auf die sich die Behälter gezielt verteilen lassen, wobei eine eingangsseitige Handhabungseinrichtung zum Übernehmen der Behälter an einer eingangsseitigen Übergabeschnittstelle und zum Einsetzen der Behälter in das Arbeitsmodul vorgesehen ist sowie eine ausgangsseitige Handhabungseinrichtung zum Entnehmen der Behälter aus dem Arbeitsmodul und zum Übergeben der Behälter an eine ausgangsseitige Übergabeschnittstelle.

Darüber hinaus besteht jedoch zunehmend Bedarf für flexible Anlagenkonzepte, um unterschiedliche Produkte mit bestmöglicher Kapazitätsauslastung auch bei häufigen Produktwechseln herstellen zu können. Ebenso sollten Produktionsunterbrechungen bei Produktwechseln oder Instandhaltungsmaßnahmen minimiert werden.

Aufgabe der Erfindung ist es, diesbezüglich Abhilfe zu schaffen.

Die gestellte Aufgabe wird mit einer Produktionsanlage nach Anspruch 1 gelöst. Demnach umfasst diese mehrere modulare Behandlungseinheiten mit jeweils einem stationären Arbeitsmodul zum Herstellen oder Behandeln der Behälter und ferner mit Handhabungseinrichtungen zum Handhaben der Behälter zwischen einem Behältereingang der Behandlungseinheit und einem Behälterausgang der Behandlungseinheit und zum Positionieren der Behälter im Arbeitsmodul. Es sind wenigstens zwei gleichartige Behandlungseinheiten vorgesehen, auf die sich die Behälter gezielt verteilen lassen. Ferner können die Handhabungseinrichtungen derart konfiguriert sein, dass sich die Behandlungseinheiten einzeln austauschen lassen.

Die Handhabungseinrichtungen können integraler Bestandteil der Behandlungseinheiten sein, also beispielsweise fest auf diesen montiert sein. Ebenso ist es möglich, die Handhabungseinrichtungen als Module auszubilden. Diese sind dann austauschbar auf den Behandlungseinheiten montiert.

Erfindungsgemäß sind Module beispielsweise dadurch definiert, dass sie als funktionsfähige Einheiten montiert werden, für deren Betrieb lediglich noch Versorgungsleitungen und/oder Kommunikationsleitungen angeschlossen werden müssen.

Behälter im Sinne der Erfindung sind insbesondere Getränkeflaschen, aber auch andere Behälter für Lebensmittel, Medikamente, Hygieneartikel, Reinigungsmittel oder dergleichen. Ebenso sind bei Behältern aus Kunststoff auch Zwischenprodukte, insbesondere Vorformlinge zum Streckblasen der Behälter umfasst.

Die stationären Arbeitsmodule der Erfindung unterscheiden sich von Arbeitsmodulen des Rundläufertyps dadurch, dass die Behälter während der Bearbeitung nicht entlang eines Teilkreises umlaufen. Die Behälter könnten in den stationären Arbeitsmodulen jedoch lineare Bewegungen ausführen, beispielsweise entlang ihrer Hauptachse, und/oder Drehbewegungen ausführen, beispielsweise um ihre Hauptachse.

Unter einem einzelnen Austauschen der Behandlungseinheiten ist zu verstehen, dass diese im Wesentlichen als Ganzes bezüglich einer vorgegebenen Montageplattform, eines Montagerasters oder dergleichen demontiert und montiert werden können.

Unter Handhaben ist das Bereitstellen der Behälter für die einzelnen Arbeitsschritte zu verstehen, wobei die Handhabungseinrichtungen selbst keine Bearbeitung der Behälter bewirken, die Behälter jedoch während der Bearbeitung halten und/oder bewegen können. Die Handhabung erfolgt vorzugsweise im Neckhandling.

Eine erfindungsgemäße Konfiguration der Handhabungseinrichtungen besteht beispielsweise darin, dass zwischen Handhabungseinrichtungen benachbarter Behandlungseinheiten einheitliche und/oder korrespondierende Schnittstellen zur Behälterübergabe zwischen den Behandlungseinheiten ausgebildet sind. Ebenso kann die Lage der Schnittstellen bezüglich eines vorgegebenen Montagerasters einheitlich und/oder linear entlang einer Haupttransportrichtung der Behälter ausgerichtet sein. Die Schnittstellen entsprechen vorzugsweise im Wesentlichen den Behältereingängen und Behälterausgängen der Behandlungseinheiten.

Unter einem gezielten Verteilen der Behälter ist ein Aufteilen des zugehörigen Produktstroms auf Teilproduktströme mittels Weichen oder dergleichen zu verstehen, ebenso das Zusammenführen von Teilproduktströmen.

Bei der Erfindung ist eine eingangsseitige Handhabungseinrichtung zum Übernehmen der Behälter am Behältereingang und zum Einsetzen der Behälter in das Arbeitsmodul vorgesehen sowie eine ausgangsseitige Handhabungseinrichtung zum Entnehmen der Behälter aus dem Arbeitsmodul und zum Übergeben der Behälter am Behälterausgang. Beide Handhabungseinrichtungen sind insbesondere separat ansteuerbar. Die eingangsseitige Handhabungseinrichtung kann dann unmittelbar nach dem Einsetzen der Behälter ins Arbeitsmodul wieder zum Behältereingang zurück bewegt werden. Ebenso kann die ausgangsseitige Handhabungseinrichtung gezielt nach Beendigung des Arbeitsschritts den Behälter aufnehmen und an den Behälterausgang bewegt werden. Somit lässt sich Zeitverlust für die Handhabung der Behälter minimieren. Das Arbeitsmodul kann unmittelbar nach Entnahme des bearbeiteten Behälters wieder beschickt werden.

Vorzugsweise sind die Handhabungseinrichtungen als getaktete Greifeinheiten ausgebildet, die sich jeweils zwischen einer Greifposition im Bereich des Arbeitsmoduls und einer eingangsseitigen Greifposition oder einer ausgangsseitigen Greifposition bewegen lassen. Geeignet sind insbesondere Schwenkbewegungen oder lineare Bewegungen von Greifarmen mit aktiven Greifern. Diese lassen sich einfach zwischen definierten Endpositionen hin und her bewegen. Die eingangsseitigen und ausgangsseitigen Greifpositionen legen vorzugsweise die Behälterposition an Übergabeschnittstellen zwischen benachbarten Behandlungseinheiten oder zu erfindungsgemäßen Verteilmodulen fest. Die Greifer können die Greiffunktion auch lediglich passiv ausführen, beispielsweise indem sie mit einer Feder ausgestattet werden, die zwei Greifklauen in eine Greifposition zwingt. Unabhängig vom aktiven oder passiven Betrieb der Greifer können die Bewegungen des zugehörigen Greifarms aktiv gesteuert über mindestens eine Achse ausgeführt werden. Auch eine aktive Steuerung über zwei oder noch mehr Achsen ist denkbar - abhängig von der Behandlung des Behälters.

Alternativ wird die gestellte Aufgabe mit einer Produktionsanlage nach Anspruch 4 gelöst, bei der eine schienenförmige Handhabungseinrichtung vorgesehen ist, die sich vom Behältereingang zum Behälterausgang erstreckt, und der Behandlungseinheit ist wenigstens eine einzeln angetriebene Handhabungseinrichtung zumindest temporär zugeordnet, die sich entlang der schienenförmigen Handhabungseinrichtung geführt bewegen lässt und mit der sich der Behälter, insbesondere während der geführten Bewegung, im Arbeitsmodul positionieren lässt.

Die schienenförmige Handhabungseinrichtung kann aus beliebigen Führungselementen, wie beispielsweise Führungsprofilen, Geländern oder dergleichen bestehen, sofern eine durchgehende Bewegung der einzeln angetriebenen Handhabungseinrichtungen über Schnittstellen mit benachbarten Behandlungseinheiten oder Verteilmodulen hinweg gewährleistet ist.

Die einzeln angetriebenen Handhabungseinrichtungen sind als Fahrzeuge ausgebildet, wie beispielsweise Schlitten, Shuttles oder dergleichen. Diese sind den jeweiligen Behandlungseinheiten temporär zugeordnet, beispielsweise während die Behälter im zugeordneten Arbeitsmodul positioniert sind. Es sind vorzugsweise mindestens so viele einzeln angetriebene Handhabungseinrichtungen vorgesehen wie Behandlungseinheiten mit schienenförmigen Handhabungseinrichtungen.

Die schienenförmige Handhabungseinrichtung kann aus einem magnetischen Linearantrieb bestehen mit einer Vielzahl auf einer Schiene angeordneten Spulen zum Antrieb der Fahrzeuge. Die Fahrzeuge können hierzu mit Permanentmagneten oder Eisenkernen bestückt werden, welche mit den von den Spulen erzeugten Magnetfeldern zum Antrieb der Fahrzeuge zusammenwirken. Zudem können die Fahrzeuge von einer an oder in der Schiene angeordneten Leitung elektrische Energie beziehen, welche auf den Fahrzeugen angeordnete Greifarme und/oder Greifer antreiben kann.

Außerhalb der Erfindung beschrieben wird zudem eine Produktionsanlage zum Herstellen und/oder Abfüllen von Behältern, insbesondere von Getränkeflaschen, mit modularen Behandlungseinheiten, die jeweils umfassen: wenigstens ein stationäres Arbeitsmodul zum Herstellen oder Behandeln der Behälter; und Handhabungseinrichtungen zum Handhaben der Behälter zwischen einem Behältereingang der Behandlungseinheit und einem Behälterausgang der Behandlungseinheit und zum Positionieren der Behälter im Arbeitsmodul, wobei die Handhabungseinrichtungen zwischen dem Behältereingang und dem Behälterausgang verschiebbare Greifeinheiten mit insbesondere schwenkbar gelagerten Greifarmen variabler Länge umfassen, um die Behälter beim Verschieben der Greifeinheiten im Bereich der Arbeitsmodule zu halten, insbesondere in einer bezüglich der Arbeitsmodule konstanten Position.

Die Länge der Greifarme ist hierbei bezüglich ihrer Lagerung auf der Handhabungseinrichtung definiert. Die Greifarme können beispielsweise teleskopartig ausgebildet sein oder im Sinne eines Linearschlittens bezüglich ihres Lagers verschiebbar sein. Dadurch lässt sich ein Beschleunigen oder Abbremsen der Behälter bei der Entnahme aus Arbeitsmodulen oder bei der Eingabe in Arbeitsmodule realisieren - zusätzlich oder alternativ zu der Bewegung des Fahrzeugs.

Vorzugsweise umfassen die Greifeinheiten Greifer zum formschlüssigen Greifen eines Halsbereichs der Behälter, insbesondere derart, dass der gehaltene Behälter um seine Längsachse in dem Greifer drehbar gelagert ist. Dies ermöglicht ein Halten des Behälters im Arbeitsmodul in einer bezüglich des Arbeitsmoduls konstanten Drehlage, während sich die angetriebene Handhabungseinrichtung weiter bewegt. Unter einem Formschluss ist zu verstehen, dass der Behälter bezüglich seiner Position im Greifer festgelegt ist, nicht jedoch bezüglich seiner Drehlage. Die Greifer können jedoch ebenso zum kraftschlüssigen Greifen des Behälters, insbesondere des Halsbereichs, mit diesbezüglich festgelegter Drehlage ausgebildet sein, je nach auszuführendem Arbeitsschritt. Vorzugsweise sind die Greifer aktiv steuerbar, insbesondere derart, dass sie sowohl ein formschlüssiges als auch ein kraftschlüssiges Greifen der Behälter ermöglichen. Die Handhabungseinrichtungen eignen sich dann in Kombination mit entsprechend unterschiedlichen Arbeitsmodulen.

Vorzugsweise sind an den Greifarmen Greifer schwenkbar gelagert, insbesondere derart, dass sich die Greifarme und die Greifer getrennt voneinander um zueinander parallele Drehachsen schwenken lassen. Damit lassen sich die Behälter während des Weiterfahrens der als Fahrzeuge ausgebildeten Handhabungseinrichtungen in einer bezüglich der Arbeitsmodule konstanten Position halten und dabei bezüglich des Greifarms und/oder des Arbeitsmoduls drehen. Ebenso lassen sich komplexe Bewegungen des Behälters bezüglich der Arbeitsmodule realisieren, beispielsweise für eine teilumfängliche oder vollumfängliche Etikettierung oder ein entsprechendes Bedrucken der Behälter. Das Bedrucken erfolgt vorzugsweise digital mit einem oder mehreren Druckköpfen.

Bei einer günstigen Ausführungsform sind die schienenförmigen Handhabungseinrichtungen im Bereich der Arbeitsmodule kurvenförmig ausgebildet. Insbesondere kann ein bezüglich des Arbeitsmoduls konvexer Kurvenabschnitt ausgebildet sein. Dadurch lassen sich die für eine geeignete Positionierung der Behälter im Arbeitsmodul benötigten Bewegungen der Greifarme vereinfachen.

Die Erfindung umfasst ferner wenigstens ein zwischen Behandlungseinheiten für unterschiedliche Arbeitsschritte vorgesehenes Verteilmodul, mit dem sich ein von den Behältern gebildeter Produktstrom auf wenigstens zwei Teilproduktströme verteilen lässt oder wenigstens zwei von den Behältern gebildete Teilproduktströme zusammen führen lassen. Dadurch lässt sich die Kapazität der Produktionsanlage besser nutzen. Die Verteilmodule verteilen die Behälter vorzugsweise in einer Nebentransportrichtung quer zur Haupttransportrichtung der Behälter durch die Produktionsanlage. Bei einer linearen Anordnung der Behandlungseinheiten ist die Nebentransportrichtung vorzugsweise orthogonal, insbesondere in seitlicher Richtung, zur Haupttransportrichtung der Behälter. Hierbei umfasst der Begriff des Verteilens auch das Zusammenführen von Behältern in einen Produktstrom.

Vorzugsweise sind auf dem Verteilmodul zwei separat angetriebene Transportmittel mit jeweils wenigstens einer daran befestigten Reihe von Greifern zum Übernehmen und Übergeben der Behälter vorgesehen, wobei sich mit den Greifern beider Transportmittel identische Schnittstellenpositionen zum Übernehmen/Übergeben von/an die Behandlungseinheiten anfahren lassen. Die Greifer des einen Transportmittels lassen sich somit eingangsseitig mit Behältern bestücken, während die Greifer des anderen Transportmittels ausgangsseitig Behälter an Behandlungseinheiten verteilen. Dies ermöglicht eine quasikontinuierliche Verteilung der Behälter durch abwechselndes Bestücken des einen oder anderen Transportmittels. Die Transportmittel verteilen die Behälter quer zur Haupttransportrichtung der Behälter. Es sind somit am Verteilmodul mehrere Übernahmeschnittstellen und/oder Übergabeschnittstellen quer zur Haupttransportrichtung verteilt vorgesehen. Somit lassen sich Produktströme aufteilen, zusammenführen und/oder gezielt verteilen. Prinzipiell wäre es auch denkbar, an jedem Transportmittel lediglich einen einzigen Greifer vorzusehen.

Vorzugsweise sind auf dem Verteilmodul zwei umlaufende Transportmittel mit jeweils wenigstens einer daran befestigten Reihe von Greifern zum Übernehmen/Übergeben der Behälter vorgesehen, wobei jeweils ein eingangsseitiges Trum der Transportmittel und ein ausgangsseitiges Trum der Transportmittel derart übereinander liegend vorgesehen sind, dass sich die Reihen von Greifern nacheinander an identische Schnittstellenpositionen bewegen lassen. Die Greiferreihen lassen sich daher abwechselnd an identische Schnittstellenpositionen zum Übernehmen oder Übergeben der Behälter fahren. Hierbei sind die Greifer vorzugsweise derart ausgebildet, dass sie die Behälter an den Schnittstellen aus der derselben vertikalen Lage übernehmen und/oder in die gleiche vertikale Lage übergeben können. Dazu können auch höhenverstellbare Greifer vorgesehen sein. Die Transportmittel können beispielsweise als Zahnriemen, Kette oder dergleichen ausgebildet sein.

Eine günstige Ausführungsform umfasst ferner ein mobiles Arbeitsmodul für einen ersten Arbeitsschritt mit einer vorgegebenen Arbeitsprozessdauer, das sich nacheinander an Behandlungseinheiten für einen zweiten Arbeitsschritt mit demgegenüber längerer Arbeitsprozessdauer ankoppeln lässt, um den ersten Arbeitsschritt während des zweiten Arbeitsschritts nacheinander an wenigstens zwei Behältern auszuführen.

Dadurch kann die Prozesszeit für den zweiten Arbeitsschritt besonders effizient genutzt werden und die Anzahl der Arbeitsmodule für den ersten Arbeitsschritt bei gleichzeitig effizienter Prozessauslegung reduziert werden. Insbesondere wird der erste Arbeitsschritt in einem anderen Behälterbereich ausgeführt als der zweite Arbeitsschritt. Denkbar ist beispielsweise eine Kombination eines mobilen Etikettieraggregats für eine Behälterseitenwand mit vergleichsweise kurzer Prozessdauer an einem Füllventil mit vergleichsweise langer Prozessdauer. Das Etikettieraggregat kann dabei mehrere Füllstationen abfahren.

Beispielsweise können zwei Flaschen gleichzeitig in zwei Fülleinheiten abgefüllt werden, während das mobile Etikettieraggregat in dieser Zeit beide Flaschen etikettiert, indem es die beiden Fülleinheiten nacheinander automatisch anfährt. Auf diese Weise lässt sich ein Etikettieraggregat einsparen, im Vergleich zu einer Konfiguration, bei der jeder Fülleinheit ein eigenes Etikettieraggregat zugeordnet ist. Gleichzeitig kann Platz in der Produktionshalle eingespart werden, da dann an anderer Stelle, beispielsweise im zusammengeführten Produktstrom nach dem Befüllen, keine separate Etikettiermaschine mehr benötigt wird. Dieses Prinzip lässt sich bei den unterschiedlichsten Prozessen an anderen Arbeitsmodulen anwenden, beispielsweise beim Inmoldlabeling in stationären Blasmodulen oder an einer mobilen Erwärmungseinheit für Kunststoffvorformlinge in stationären Sterilisationsmodulen, oder umgekehrt: an stationären Erwärmungsmodulen mit mobilen Sterilisationsmodulen. Denkbar sind auch mobile Inspektionseinheiten, welche die Behälter während anderer stationärer Behandlungsschritte inspizieren. Das mobile Arbeitsmodul kann dabei auf Bedarf von anderen Arbeitsmodulen angefordert werden. Ferner können an den stationären Arbeitsmodulen Andockelemente vorgesehen sein, um das mobile Arbeitsmodul genau positionieren zu können.

Die gestellte Aufgabe wird ebenso mit einem Verfahren zum Herstellen und/oder Abfüllen von Behältern, insbesondere von Getränkeflaschen, in der erfindungsgemäßen Produktionsanlage gelöst, bei dem die Behälter aus einer Behandlungseinheit für einen ersten Arbeitsschritt mit einer ersten Arbeitsprozessdauer auf mehrere Behandlungseinheiten für einen zweiten Arbeitsschritt mit einer zweiten, demgegenüber längeren Arbeitsprozessdauer verteilt werden. Ebenso ist eine Richtungsumkehr im Sinne eines Zusammenfassens von Behälterströmen vor einem vergleichsweise schnellen Prozess umfasst. Somit lassen sich Behandlungseinheiten mit unterschiedlicher Produktionsleistung effizient hintereinander schalten und dadurch die Produktionsleistung der Anlage insgesamt maximieren.

Vorzugsweise ist dabei wenigstens eine erste Behandlungseinheit für den ersten Arbeitsschritt mit einer ersten Arbeitsprozessdauer vorgesehen und wenigstens eine zweite, insbesondere parallel dazu geschaltete Behandlungseinheit für den ersten Arbeitsschritt mit einer zweiten Arbeitsprozessdauer, die länger ist als die erste Arbeitsprozessdauer. Die Behälter werden dann auf die Behandlungseinheiten für den zweiten Arbeitsschritt je nach Prozessdauer für den ersten Arbeitsschritt gewichtet verteilt, um die Auslastung der Behandlungseinheiten für den zweiten Arbeitsschritt aneinander anzugleichen. Anders gesagt, ermöglicht die jeweils kürzere Arbeitsprozessdauer eine höhere Maschinenleistung, so dass pro Zeiteinheit mehr Behälter im ersten Arbeitsschritt behandelt und auf nachfolgende Behandlungseinheiten für den zweiten Arbeitsschritt verteilt werden können.

Die Gewichtung lässt sich flexibel, beispielsweise produktabhängig, anpassen. Dies steht im Gegensatz zu einer festen Zuordnung im Sinne einer verzweigungsfreien Reihenschaltung der Behandlungseinheiten für den ersten und zweiten Arbeitsschritt. Somit lässt sich die Produktionskapazität der Produktionsanlage insgesamt besser ausnutzen.

Unterschiedliche Arbeitsprozessdauern im ersten Arbeitsschritt können beispielsweise beim Verarbeiten unterschiedlicher Produkte entstehen, wie beim Abfüllen unterschiedlicher Getränke. Es lassen sich dann beispielsweise die Produkte aus dem langsameren Abfüllprozess auf weniger nachfolgende Behandlungseinheiten verteilen als die Produkte aus dem schnelleren Abfüllprozess. Die variable Verteilung von Behältern lässt sich auch in umgekehrter Richtung im Sinne eines gezielten Zusammenfassens von Produktströmen ausführen, also bei einem Übergang von vergleichsweise langsamen Prozessen zu vergleichsweise schnellen Prozessen, die eine geringere Anzahl von Behandlungseinheiten erfordern. Die Behälter werden dann vorrangig der Behandlungseinheit zugeführt, die den jeweiligen Arbeitsprozess schneller durchführen kann. Beispielsweise lässt sich ein dünnflüssiges Getränk schneller abfüllen als ein dickflüssiges Getränk. Die Füllstation mit dem dünnflüssigen Getränk wird dann vorrangig, also mit mehr Behältern pro Zeiteinheit, beschickt als die Füllstation mit dem dickflüssigen Getränk.

Diese flexible Gewichtung und Führung paralleler Teilproduktströme lässt sich ebenso in umgekehrter Richtung, also beim Zusammenfassen aus mehreren vergleichsweise langsamen Behandlungsschritten auf vergleichsweise schnelle Behandlungsschritte durchführen. Die Verteilung der Behälter auf parallel geschaltete Behandlungseinheiten kann auf Anforderung jeweils freier Behandlungseinheiten spontan festgelegt werden. Insbesondere, wenn ein Behandlungsprozess keine feste Behandlungszeit aufweist. Dies kann der Fall sein, wenn ein Prozess durch eine Inspektionseinheit kontrolliert wird, und der Prozess so lange ausgeführt werden muss, bis das Inspektionsergebnis in Ordnung ist, beispielsweise beim Bedrucken der Behälter mit einem separatem Korrekturdruckschritt.

Bevorzugte Ausführungsformen sind in der Zeichnung dargestellt. Es zeigen:
Fig. 1 eine Produktionsanlage mit erfindungsgemäß verketteten Behandlungseinheiten in der schematischen Draufsicht;
Fig. 2 eine schematische Draufsicht auf eine erste Ausführungsform der erfindungsgemäßen Behandlungseinheit;
Fig. 3A - 3C schematische Draufsichten auf eine zweite Ausführungsform der erfindungsgemäßen Behandlungseinheit;
Fig. 4 eine schematische Draufsicht auf eine dritte Ausführungsform der erfindungsgemäßen Behandlungseinheit;
Fig. 5A, 5B schematische Draufsichten auf eine vierte Ausführungsform der erfindungsgemäßen Behandlungseinheit;
Fig. 6 eine schematische Draufsicht auf eine fünfte Ausführungsform der erfindungsgemäßen Behandlungseinheit;
Fig. 7A - 7E schematische Draufsichten auf eine sechste Ausführungsform der erfindungsgemäßen Behandlungseinheit;
Fig. 8 eine erfindungsgemäße Produktionsanlage mit Verteilmodulen zum Verketten der Behandlungseinheiten, in der schematischen Draufsicht;
Fig. 9 eine schematische Draufsicht auf ein erfindungsgemäßes Verteilmodul;
Fig. 10 ein Längsschnitt durch das Verteilmodul;
Fig. 11 eine schematische Darstellung eines Verfahrens zum Anpassen von Produktströmen durch die erfindungsgemäße Produktionsanlage;
Fig. 12 eine schematische Darstellung einer Produktionsanlage mit einer alternativen Produktführung; und
Fig. 13 eine schematische Darstellung einer Produktionsanlage mit einem mobilen Arbeitsmodul.

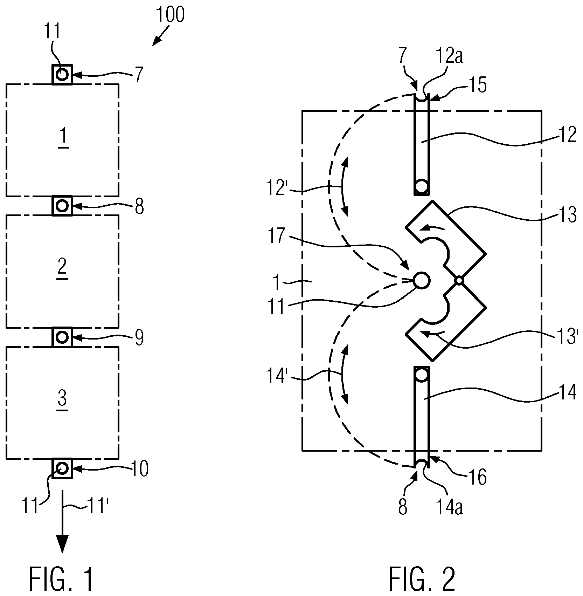

Wie die Fig. 1 erkennen lässt, umfasst die erfindungsgemäße Produktionsanlage in einer ersten Ausführungsform 100 mehrere linear verkettete Behandlungseinheiten 1, 2, 3 zum Herstellen und/oder Bearbeiten von Behältern 11, wie beispielsweise Getränkeflaschen. Die Behandlungseinheiten 1, 2, 3 sind beispielsweise ein Füllmodul, ein Verschließmodul und ein Etikettiermodul. Angedeutet sind ferner Übergabeschnittstellen 7 - 10 zum Übergeben der Behälter 11 an Modulgrenzen. Mittels der Übergabeschnittstellen 7 - 10 lassen sich die Behandlungseinheiten 1, 2, 3 verketten, um die Behälter 11 in Form eines durchgehenden Produktstroms in einer Haupttransportrichtung 11' nacheinander durch die einzelnen Behandlungseinheiten 1, 2, 3 zu leiten. Die Schnittstellen 7 - 10 sind derart einheitlich und/oder mit korrespondierenden Behältereingängen und Behälterausgängen ausgebildet, dass ein Austausch der einzelnen Behandlungseinheiten 1, 2, 3 ohne Demontage benachbarter Behandlungseinheiten möglich ist. Hierzu können die Behandlungseinheiten 1, 2, 3 beispielsweise einheitliche Montagepunkte bezüglich eines vorgegebenen Montagerasters (nicht gezeigt) aufweisen.

Die Fig. 2 zeigt schematisch eine erfindungsgemäße Behandlungseinheit 1 in einer ersten Ausführungsform. Demnach sind eine eingangsseitige Handhabungseinrichtung 12, ein Arbeitsmodul 13 und eine ausgangsseitige Handhabungseinrichtung 14 vorgesehen. Die eingangsseitige Handhabungseinrichtung 12 ist in einer eingangsseitigen Greifposition 15 zur Übernahme der Behälter 11 am Behältereingang, also im Bereich der eingangsseitigen Schnittstelle 7, dargestellt. Entsprechend ist die ausgangsseitige Handhabungseinrichtung 14 in einer ausgangsseitigen Greifposition 16 zur Übergabe der Behälter 11 am Behälterausgang, also im Bereich der ausgangsseitigen Schnittstelle 8 dargestellt. Die Handhabungseinrichtungen 12, 14 haben an ihrem freien Ende einen bevorzugt aktiven Greifer 12a, 14a.

Die Handhabungseinrichtungen 12, 14 können in eine Greifposition 17 im Bereich des Arbeitsmoduls 13 bewegt werden, um den Behälter 11 für den jeweiligen Arbeitsschritt an das Arbeitsmodul 13 zu übergeben oder aus diesem zu entnehmen. Ebenso können die Handhabungseinrichtungen 12, 14 den Behälter 11 dort bei Bedarf in einer geeigneten Arbeitsposition halten oder stabilisieren. Unter Behälter im Sinne der Erfindung fallen auch Zwischenprodukte, insbesondere Vorformlinge zum Blasen von Kunststoffbehältern und zusammengestellte Gebinde mit mehreren Behältern.

Die Handhabungseinrichtungen 12, 14 sind getaktet betrieben, insbesondere derart, dass die eingangsseitige Handhabungseinrichtung 12 unmittelbar nach der Behälterübergabe an das Arbeitsmodul 13 zurück in die eingangsseitige Greifposition 15 zurück gefahren wird. Entsprechend werden die Behälter 11 unmittelbar nach der Behandlung im Arbeitsmodul 13 von der ausgangsseitigen Handhabungseinrichtung 14 aufgenommen und an die ausgangsseitige Greifposition 16 gefahren. Dadurch wird ein zeitlich überlappender Betrieb der Handhabungseinrichtungen 12, 14 ermöglicht und die Produktionsleistung der Behandlungseinheit 1 erhöht. Die Bewegung der Handhabungseinrichtungen 12, 14 ist durch Doppelpfeile 12', 14' als Schwenkbewegung dargestellt. Möglich wären aber auch lineare Bewegungsabläufe.

Das Arbeitsmodul 13 ist stationär auf der Behandlungseinheit 1 gelagert, im Gegensatz zu umlaufenden Arbeitsmodulen bei Rundläufermaschinen. Darunter ist zu verstehen, dass das Arbeitsmodul 13 lediglich die für den jeweiligen Arbeitsschritt nötigen Bewegungen 13' ausführt, beispielsweise einschließlich Öffnungs- und Schließbewegungen zum Beschicken und Entnehmen. Dies ist in der Fig. 2 für Blasformhälften schematisch angedeutet.

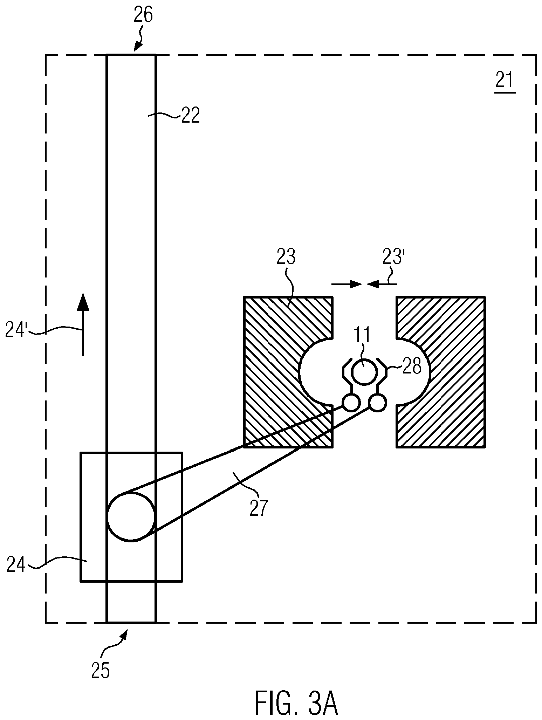

Die Figuren 3A bis 7E zeigen alternative Ausführungsformen 21, 21a - 21d der Behandlungseinheiten, bei denen die Behälter 11 mit einer Kombination schienenförmiger Handhabungseinrichtungen 22 und darauf laufender, unabhängig angetriebener Handhabungseinrichtungen 24 mit Greifarmen 27 und daran gelagerten Greifern 28 gehandhabt werden. Die schienenförmigen Handhabungseinrichtungen 22 erstrecken sich jeweils zwischen eingangsseitigen Schnittstellen 25 und ausgangsseitigen Schnittstellen 26 und sind den Behandlungseinheiten 21, 21a - 21d somit permanent zugeordnet.

Die im Sinne von Fahrzeugen, Shuttles oder dergleichen auf den schienenförmigen Handhabungseinrichtungen 22 laufenden, beispielsweise magnetisch angetriebenen Handhabungseinrichtungen 24 können durchgehend zwischen den Schnittstellen 25, 26, also zwischen dem Behältereingang und dem Behälterausgang der Behandlungseinheit 21, 21a - 21d in Richtung des Pfeils 24' und ebenso über die Schnittstellen 25, 26 hinaus bewegt werden. Die angetriebenen Handhabungseinrichtungen 24 sind den Behandlungseinheiten 21, 21a - 21d somit nur temporär zugeordnet. Entsprechend entfällt eine Behälterübergabe an den Schnittstellen 25, 26 zwischen benachbarten schienenförmigen Handhabungseinrichtungen 22. Vorzugsweise sind mehr angetriebene Handhabungseinrichtungen 24 vorgesehen als Behandlungseinheiten 21, 21a - 21d mit schienenförmigen Handhabungseinrichtungen 22. Die Geschwindigkeit der angetriebenen Handhabungseinrichtungen 24 kann gezielt variiert werden, beispielsweise während der Bearbeitung der Behälter 11.

Die Fig. 3A zeigt eine Behandlungseinheit 21 mit einem Arbeitsmodul 23 umfassend linear in Pfeilrichtung 23' bewegbarer Blasformhälften in einem Zustand beim Einsetzen des Behälters 11, hier eines Vorformlings, in das Arbeitsmodul 23. Hierbei sind die Greifer 28 lediglich formschlüssig um den bei der Behandlung unveränderten, späteren Halsbereich des Behälters 11 geschlossen, so dass sich dieser im Greifer 28 noch drehen kann. Entsprechend ist lediglich die Position des Behälters 11 durch den Greifer 28 festgelegt, nicht jedoch seine Drehlage. Somit kann der Behälter 11 in einer bezüglich des Arbeitsmoduls 23 festgelegten Drehlage geblasen werden, während die angetriebene Handhabungseinrichtung 24 weiterbewegt wird und sich der Greifer 28 um den Behälter 11 dreht.

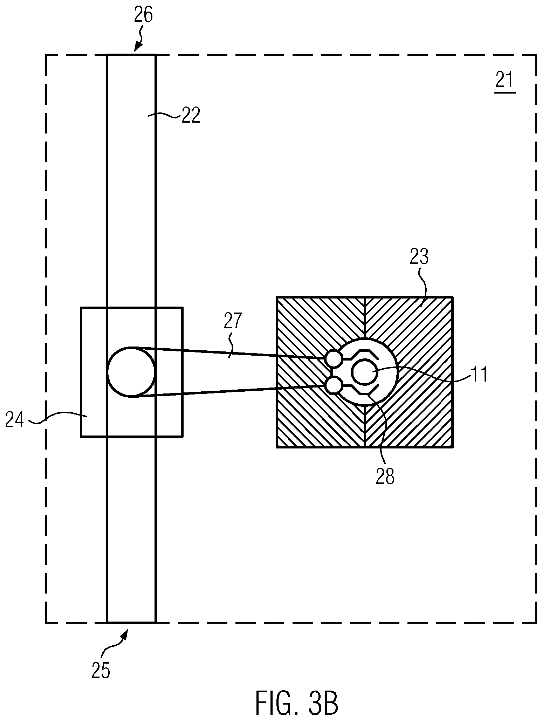

Die Fig. 3B zeigt einen Zustand während des Arbeitsprozesses in der Behandlungseinheit 21. Demnach hat sich die angetriebene Handhabungseinrichtung 24 weiter bewegt und sich der Greifer 28 um den Behälter 11 gedreht. Ferner ist zu erkennen, dass sich die Länge des Greifarms 27 und dessen Drehlage auf der Handhabungseinrichtung 24 geändert hat. Gezeigt ist ferner eine optionale drehbare Lagerung des Greifers 28 auf dem Greifarm 27. Der Greifarm 27 ist somit sowohl schwenkbar als auch teleskopierbar oder in anderer Weise längenverstellbar.

Der formschlüssige Griff der Greifer 28 könnte beispielsweise derart sein, dass eine zulässige Reibung zwischen dem Behälter 11 und dem Greifer 28 gerade nicht überschritten wird oder aber soweit gelockert werden, dass beispielsweise nur noch ein an dem Behälter 11 ausgebildeter Tragring den Greifer 28 berührt. Der Greifer 28 lässt sich vorzugsweise aktiv an den gewünschten Formschluss oder Kraftschluss anpassen, beispielsweise in Abhängigkeit von der Behälterführung und den benötigten Drehlagen des Behälters 11 im Arbeitsmodul 23.

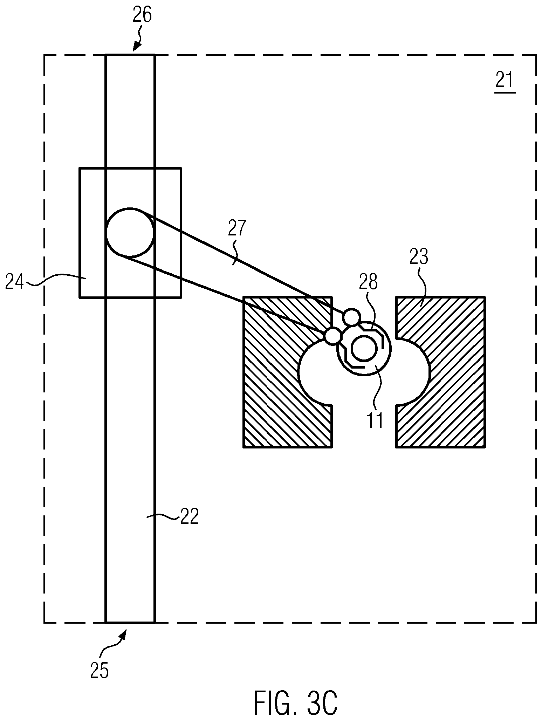

Die Fig. 3C zeigt einen Zustand beim Entnehmen des Behälters 11, hier des fertig geblasenen Behälters, aus dem Arbeitsmodul 23. Die Transportgeschwindigkeit der angetriebenen Handhabungseinrichtung 24 könnte anschließend erhöht werden bis ein der Fig. 3A entsprechender Zustand in einer nachfolgenden Behandlungseinheit 21 erreicht wird.

Die Kombination schienenförmiger und angetriebener Handhabungseinrichtungen 22, 24 ermöglicht einen quasikontinuierlichen Betrieb, bei dem zwar die Behälter 11 in den Arbeitsmodulen getaktet, insbesondere vorübergehend stationär, bearbeitet werden, bei dem die Handhabungseinrichtungen 24 jedoch kontinuierlich angetrieben sind, insbesondere mit während des Vorbeilaufens an den Arbeitsmodulen 23 variierender Geschwindigkeit.

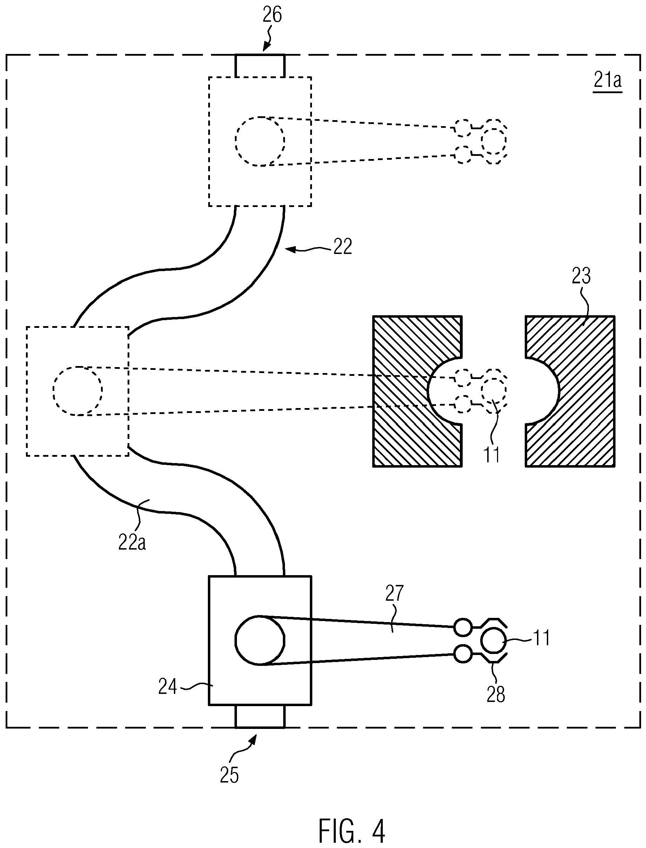

Die Fig. 4 zeigt eine dritte Ausführungsform 21a der erfindungsgemäßen Behandlungseinheit, bei der die schienenförmige Handhabungseinrichtung 22 einen kurvenförmigen Abschnitt 22a umfasst, der insbesondere konvex bezüglich des Arbeitsmoduls 23 ausgebildet ist. Ein Verschwenken des Greifarms 27 ist dann gegebenenfalls entbehrlich (siehe gestrichelte Positionen), so dass die angetriebenen Handhabungseinrichtungen 24 vereinfacht werden können. Ansonsten können die gleichen Funktionen und Abläufe realisiert werden wie bei der zweiten Ausführungsform.

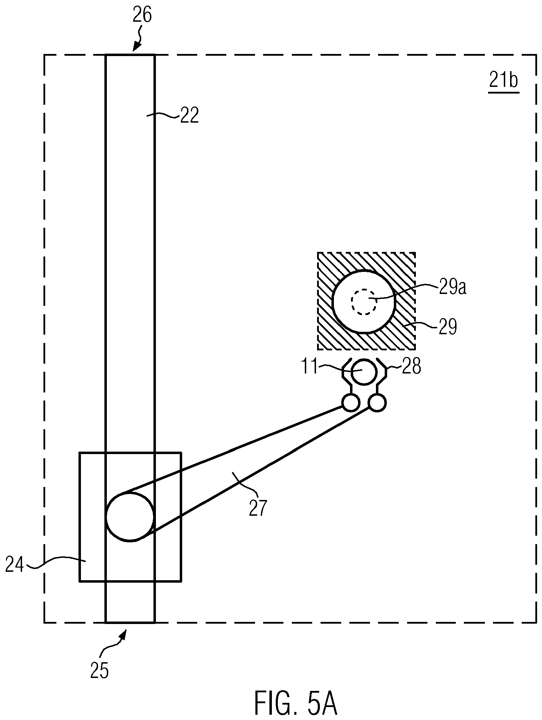

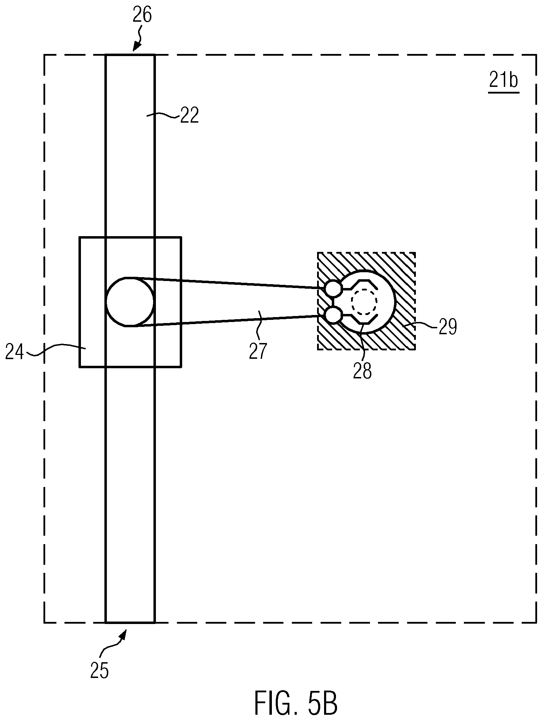

Die Figuren 5A und 5B zeigen eine vierte Ausführungsform 21b der erfindungsgemäßen Behandlungseinheit, die sich von der zweiten Ausführungsform 21 durch einen den Behälter 11 kraftschlüssig fixierenden Greifer 28 unterscheidet und durch ein andersartiges Arbeitsmodul 29, beispielsweise einen Rinser mit einem Rinsventil 29a oder einen Füller. Die Fig. 5A zeigt einen Zustand beim Heranfahren des Behälters 11 an das Arbeitsmodul 29, die Fig. 5B den im Arbeitsmodul 29 positionierten Behälter 11. Demnach ist der Greifarm 27 in der Länge verstellbar und schwenkbar gelagert. Ebenso ist der Greifer 28 schwenkbar am Greifarm 27 gelagert.

Der Greifer 28 ist vorzugsweise aktiv gesteuert, so dass beispielsweise beim Verschließen des Behälters 11 im Arbeitsmodul 29 ein Antriebsdrehmoment des Greifers 28 überwacht werden könnte, um den Arbeitsschritt zu überwachen oder zu steuern.

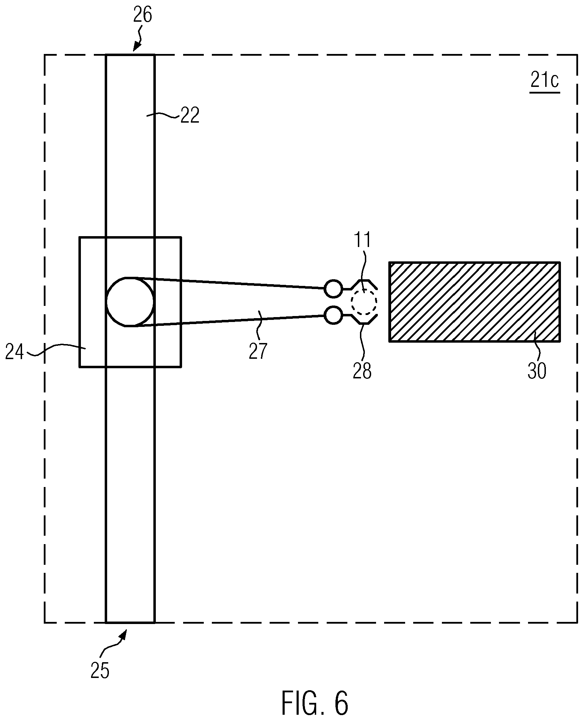

Die Fig. 6 zeigt eine fünfte Ausführungsform 21c der erfindungsgemäßen Behandlungseinheit, bei der die Schwenkbewegung des Greifarms 27 dazu benutzt wird, eine Seitenfläche des Behälters 11 bezüglich eines Arbeitsmoduls 30, beispielsweise eines freistehenden Etikettieraggregats oder eines Aggregats zum Direktbedrucken, zu drehen. In diesem Fall ist ein Schwenken der Greifer 28 bezüglich des Greifarms 27 entbehrlich. Lediglich dessen Länge ist beispielsweise durch Teleskopieren an die Transportbewegung der angetriebenen Handhabungseinrichtung 24 anzupassen.

In diesem Fall ist der Behälter 11 kraftschlüssig im Greifer 28 fixiert, so dass sich dieser allein durch die Schwenkbewegung des Greifarms 27 dreht und die Seitenwand des Behälters 11 an dem Arbeitsmodul 30 abrollt. Um für ein Etikettieren nötige Anpressdrücke zu realisieren, kann der Behälter 11 beispielsweise sowohl im Halsbereich als auch in einem unteren Seitenwandbereich gehalten oder mittels eines Gegenlagers abgestützt werden.

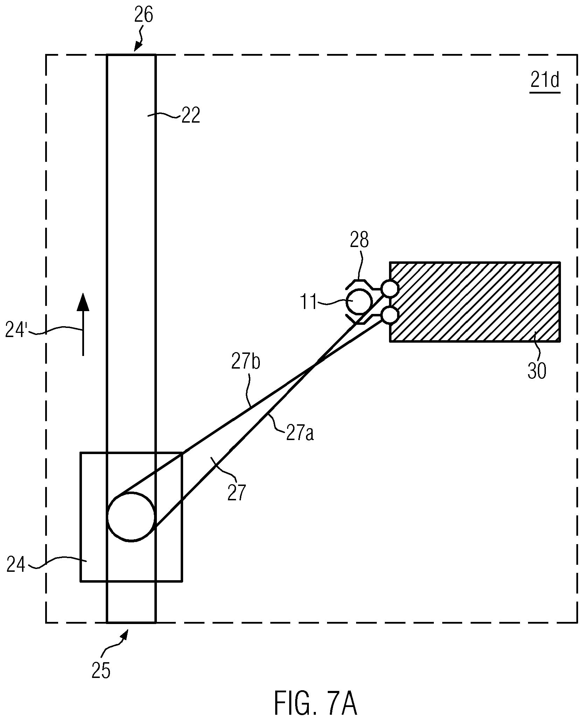

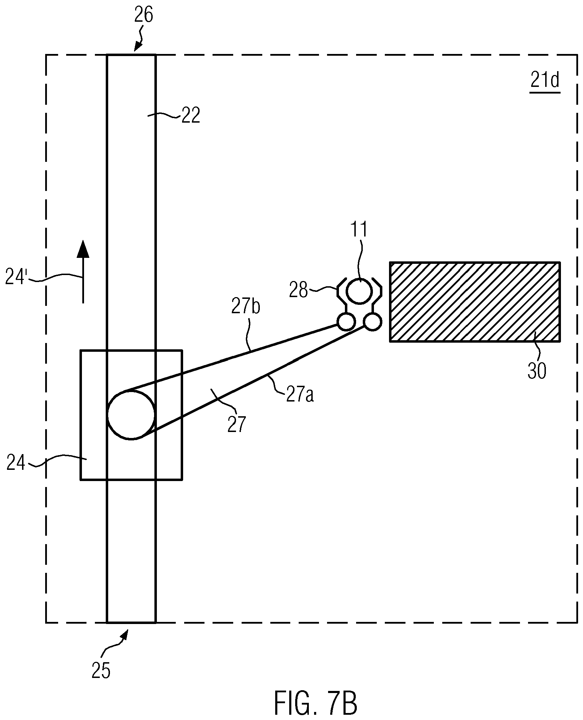

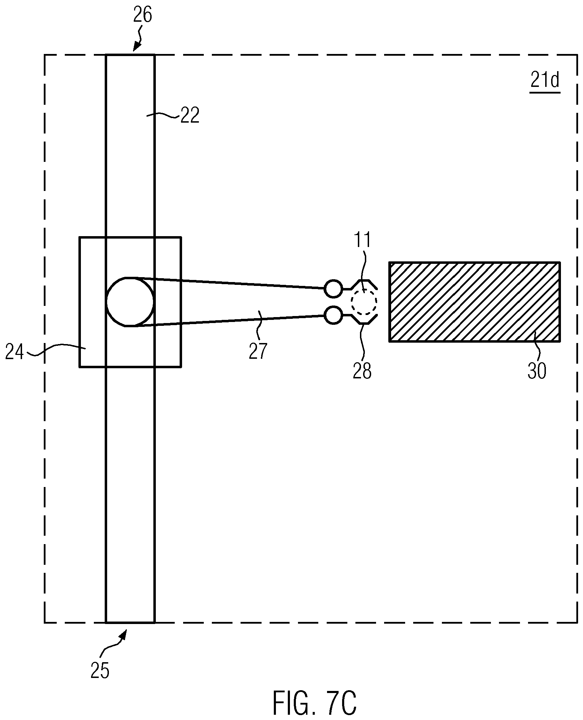

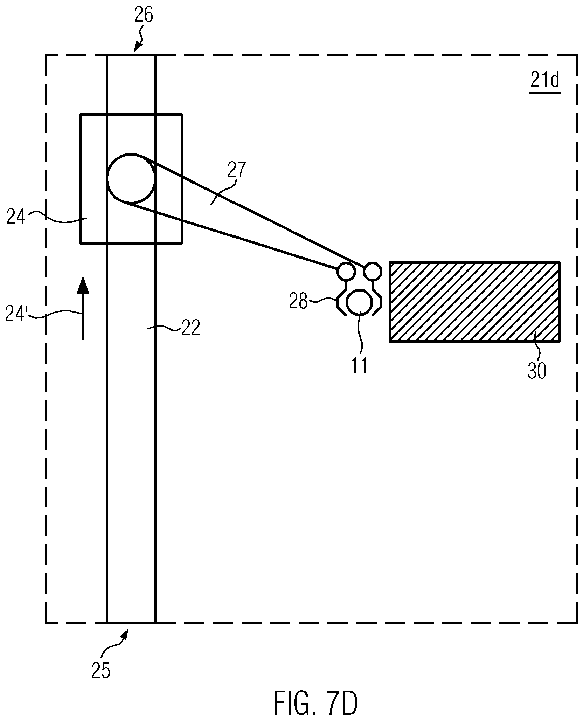

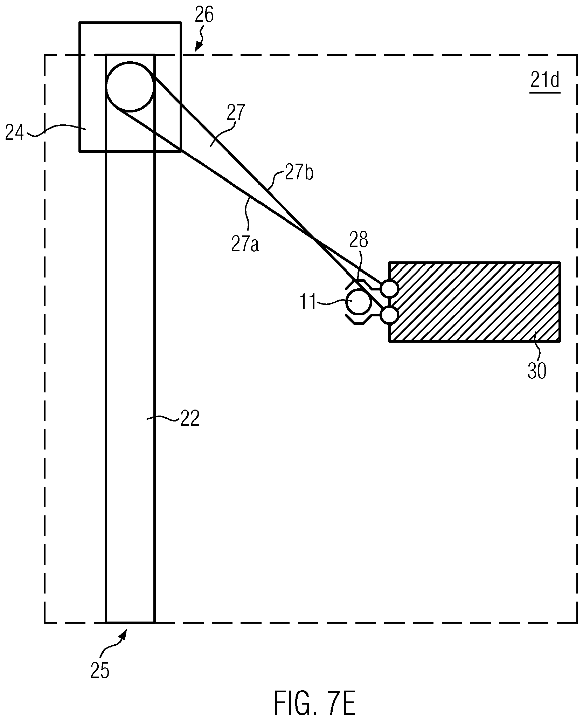

Die Fig. 7A - 7E zeigen eine sechste Ausführungsform 21d der erfindungsgemäßen Behandlungseinheit, bei der die Schwenkbewegung des Greifarms 27 durch eine Schwenkbewegung des Greifers 28 unterstützt wird, um eine Seitenfläche des Behälters 11 bezüglich eines Arbeitsmoduls 30, beispielsweise eines freistehenden Etikettieraggregats oder eines Aggregats zum Direktbedrucken, vollumfänglich zu drehen. Auch in diesem Fall ist der Behälter 11 kraftschlüssig im Greifer 28 fixiert, so dass seine Drehlage sich bezüglich des Greifers 28 nicht ändert. Zur Verdeutlichung der Schwenkbewegungen ist der Greifarm 27 schematisch mittels der Schenkel 27a, 27b dargestellt, die sich in den Fig. 7A und 7E kreuzen. Die Fig. 7B bis 7D verdeutlichen beispielhaft Zwischenpositionen der angetriebenen Handhabungseinrichtung 24 und des Greifarms 27.

Schienenförmige und angetriebene Handhabungseinrichtungen 22, 24 ließen sich auch vorteilhaft zur Vorwärmung von Vorformlingen einsetzen. Diese könnten mit den beschriebenen Greifarmen 27 und Greifern 28 in unterschiedliche Abstände und/oder Drehlagen bezüglich Heizstrahlern oder dergleichen gebracht werden. Es ließe sich somit ein sogenanntes Preferential Heating realisieren. Es wären außerdem kontinuierliche oder oszillierende Schwenkbewegungen der zu erwärmenden Vorformlinge denkbar.

Mit schienenförmigen und angetriebenen Handhabungseinrichtungen 22, 24 erübrigt sich ein Übergeben der Behälter von Greifer zu Greifer an den Grenzen der Behandlungseinheiten. Somit lässt sich die für die eigentliche Behandlung zur Verfügung stehende Prozesszeit verlängern. Durch das kontinuierliche Greifen lassen sich insbesondere auch Behälter ohne Tragring zuverlässig im Neckhandling handhaben.

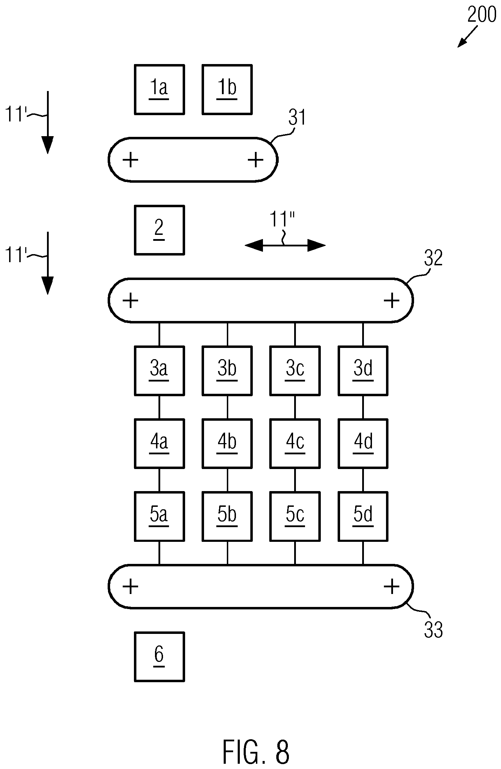

Die Fig. 8 zeigt eine besonders vorteilhafte Ausführungsform 200 der erfindungsgemäßen Produktionsanlage, bei der für Arbeitsschritte mit vergleichsweise langer Arbeitsprozessdauer mehrere parallel geschaltete Behandlungseinheiten 3a - 3d, 4a - 4d und 5a - 5d vorgesehen sind, beispielsweise Füllmodule, Verschließmodule, Etikettier-/Druckmodule. Für Arbeitsschritte mit vergleichsweise kurzer Arbeitsprozessdauer sind jeweils nur einzelne Behandlungseinheiten 2, 6 vorgesehen, beispielsweise ein Blasmodul und ein Gruppiermodul zum Zusammenstellen abgefüllter Behältergruppen. Für einen Arbeitsschritt mit mittlerer Arbeitsprozessdauer sind im Beispiel zwei Behandlungseinheiten 1a, 1b vorgesehen, beispielsweise Heizmodule für Vorformlinge.

An Schnittstellen, an denen sich die Anzahl parallel geschalteter Behandlungseinheiten ändert sind Verteilmodule 31, 32, 33 vorgesehen, mit denen sich die jeweiligen Produktströme gezielt auf Teilproduktströme zu nachfolgenden Behandlungseinheiten verteilen lassen oder sich Teilproduktströme zusammenfassen lassen.

Die Fig. 8 verdeutlicht, dass die sukzessive Bearbeitung der Behälter in den Behandlungseinheiten eine Haupttransportrichtung 11' der Behälter 11 angibt und die quer dazu erfolgende Verteilung der Behälter 11 in den Verteilmodulen 31, 32, 33 eine Nebentransportrichtung 11".

Die unverzweigte Reihenschaltung der Behandlungseinheiten 3a, 4a, 5a für die jeweiligen Teilproduktströme entspricht im Wesentlichen der in der Fig. 1 dargestellten ersten Ausführungsform 100 mit den Schnittstellen 7 - 10. Diese sind der Übersichtlichkeit halber in der Fig. 8 nicht dargestellt. Die Schnittstellen 7, 10 würden im Beispiel der Fig. 8 die Verbindung zu den Verteilmodulen 32, 33 herstellen.

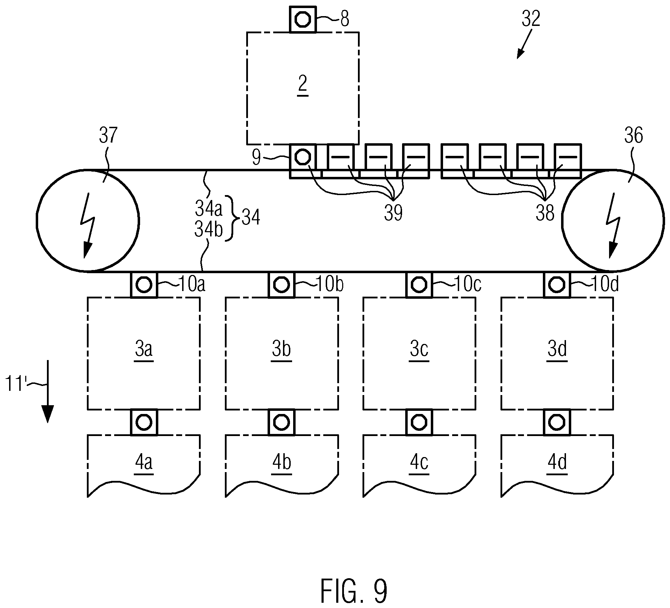

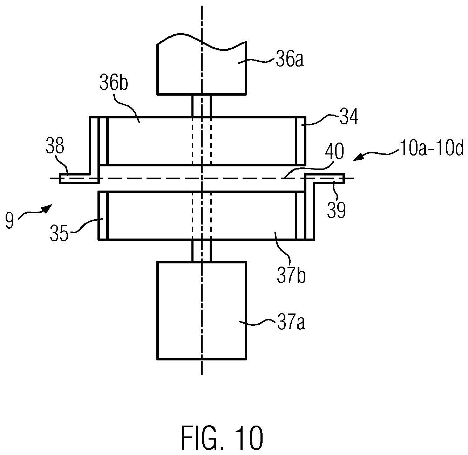

Wie die Fig. 9 und 10 im Detail zeigen, umfassen die erfindungsgemäßen Verteilmodule 31 - 33 beispielsweise umlaufende und im Wesentlichen übereinander liegende Transportmittel 34, 35, wie beispielsweise Zahnriemen, Ketten oder dergleichen. Diese sind separat mittels Antriebseinheiten 36, 37 angetrieben. An den Transportmitteln 34, 35 sind Reihen von Greifern 38, 39 befestigt, die gruppenweise jeweils an eingangsseitige und ausgangsseitige Übergabeschnittstellen gefahren werden können. Die Anzahl der eingangsseitigen und ausgangsseitigen Übergabeschnittstellen richtet sich nach der benötigten Produktstromverteilung. Im Beispiel der Fig. 9 ist eine einzige eingangsseitige Übergabeschnittstelle 9 und vier ausgangsseitige Übergabeschnittstellen 10a - 10d gezeigt.

Die Fig. 10 verdeutlicht, dass die Antriebseinheiten 36, 37 getrennt ansteuerbare Motoren 36a, 37a und separate Antriebsräder 36b, 37b umfassen. Ferner sind die Greifer 38 des einen Transportmittels 34 und die Greifer 39 des anderen Transportmittels 35 zum Greifen der Behälter 11 auf dem gleichen Höhenniveau ausgebildet, das in der Fig. 10 durch eine gestrichelte Linie 40 angedeutet ist. Die Greifer 38, 39 können die Behälter 11 somit gruppenweise nacheinander an der gleichen Schnittstelle 9 übernehmen und an den gleichen Schnittstellen 10a - 10d übergeben. Gegebenenfalls sind die Greifer 38, 39 in geeigneter Weise höhenverstellbar (nicht dargestellt).

Die Transportmittel 34, 35 bilden jeweils ein eingangsseitiges Trum 34a und ein ausgangsseitiges Trum 34b aus (unteres Transportmittel 35 in der Fig. 9 verdeckt). Wie ein Vergleich der Fig. 9 und 10 erkennen lässt, können die Greifer 38, 39 sowohl gleichzeitig am jeweils eingangsseitigen oder ausgangsseitigen Trum positioniert werden als auch entgegen gesetzt.

Damit lässt sich beispielsweise folgende Betriebsweise realisieren:
Die relativ schnell arbeitende, einzelne Behandlungseinheit 2 übergibt an der Schnittstelle 9 nacheinander Behälter 11 an die Reihe von Greifern 38 des einen Transportmittels 34. Dieses fährt mit den bestückten Greifern 38 nacheinander die ausgangsseitigen Schnittstellen 10a - 10d an und übergibt dort jeweils einen Behälter 11 an eine zugeordnete langsamere Behandlungseinheit 3a - 3d.

Das unabhängig davon angetriebene andere Transportmittel 35 kann währenddessen zur eingangsseitigen Schnittstelle 9 gefahren werden, um dessen Reihe von Greifern 39 mit Behältern 11 zu bestücken. Diese können wiederum unmittelbar anschließend an die ausgangsseitigen Schnittstellen 10a - 10d gefahren werden, um die Behälter 11 dort zu übergeben.

Ein Übergang von mehreren vergleichsweise langsam arbeitenden Behandlungseinheiten auf eine geringere Anzahl vergleichsweise schnell arbeitender Behandlungseinheiten ist analog dazu ebenso möglich.

Somit lassen sich mit den erfindungsgemäßen Verteilmodulen 31 - 33 flexible Verkettungen in der Haupttransportrichtung 11' und Verteilungen in der Nebentransportrichtung 11" kombinieren.

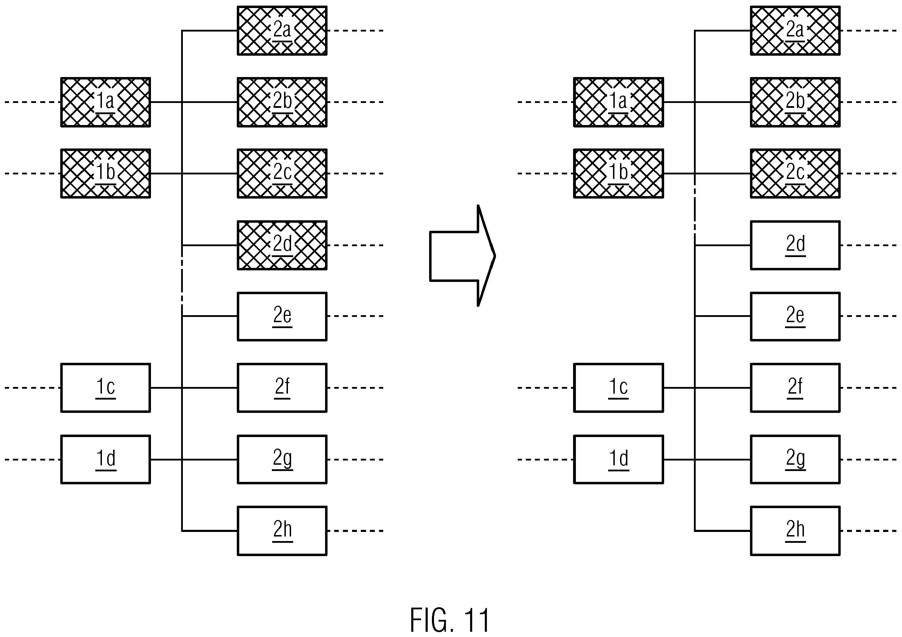

Es können somit unterschiedliche Produkte, die sich nicht bezüglich ihrer Prozessdauern unterscheiden, beispielsweise unterschiedlich gefärbte Produkte, in einem Produktstrom gezielt verteilt oder zusammen geführt werden. Ebenso können unterschiedliche Produkte, die an gleichartigen Behandlungseinheiten unterschiedliche Prozesszeiten benötigen, beispielsweise Getränke, die sich unterschiedlich schnell in Behälter einfüllen lassen, kombiniert und der Produktstrom insgesamt entsprechend der unterschiedlichen Prozesszeiten effizient auf die zu Verfügung stehenden Kapazitäten in den einzelnen Arbeitsschritten verteilt werden. Dies ist anhand der Fig. 11 verdeutlicht.

Beispielsweise können zunächst zwei parallele Produktlinien für ein erstes Produkt (schraffierte Rechtecke) und ein zweites Produkt (ungefüllte Rechtecke) mit ähnlichen Eigenschaften parallel mit identischer Anzahl Behandlungsstationen 1a, 1b, 2a, 2b, 2c, 2d sowie 1c, 1d, 2e, 2f, 2g, 2h in einem ersten und zweiten Arbeitsschritt verarbeitet werden. Nach einer Produktumstellung lässt sich beispielsweise das zweite Produkt im ersten Arbeitsschritt deutlich langsamer bearbeiten, beispielsweise abfüllen, als das erste Produkt. In diesem Fall kann die Kapazität der Produktionsanlage insgesamt unter Umständen besser ausgenutzt werden, wenn im Beispiel die Behandlungseinheit 2d für den nachfolgenden zweiten Arbeitsschritt an Stelle des ersten Produkts dem zweiten Produkt zugeordnet wird. Dies wird durch die erfindungsgemäßen Verteilmodule ermöglicht.

Derartige Umstellungen können beispielsweise beim Blasen unterschiedlich großer Behälter vorteilhaft sein, beim Abfüllen mit zusätzlicher Behältersterilisation oder dergleichen.

Die Produkte können sich dabei in der Form und/oder dem Design der Behälter, im Volumen der Behälter, im Material der Behälter, im Sterilisationsgrad der Behälter, in der Art des Verschlusses der Behälter, im abgefüllten Produkt, in der Gestaltung des Etiketts oder der Direktbedruckung, in der Anzahl der Etiketten, in der Gebindeart, wie beispielsweise Six-Pack oder Kasten, in der Art des Vorformlings, wie beispielsweise bezüglich seines Gewichts und/oder Aussehens, und vielen weiteren Merkmalen und Kombinationen aus den genannten Merkmalen unterscheiden. Dementsprechend kann es zu unterschiedlichsten Prozesszeitkombinationen der zwei Anlagen kommen, in denen ein flexibler Einsatz und/oder eine flexible Zuordnung einzelner Module vorteilhaft sein kann.

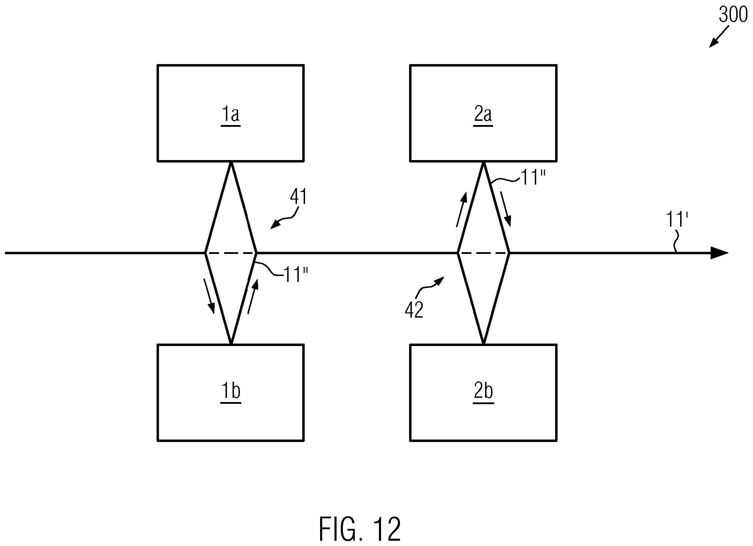

Eine weitere Möglichkeit der Flexibilisierung des Anlagenbetriebs bei gleichzeitig reduziertem Aufwand für Verteilmodule ist in der Fig. 12 schematisch anhand einer weiteren Ausführungsform 300 der erfindungsgemäßen Produktionsanlage angedeutet. Demnach verläuft der Transport der Behälter 11 in der Haupttransportrichtung 11' nicht durch die jeweiligen Behandlungseinheiten 1a, 1b, 2a, 2b hindurch sondern an diesen vorbei. Die Behälter 11 werden nur dann an Verteilmodulen 41, 42 in der Nebentransportrichtung 11" zu einer Behandlungseinheit abgezweigt, wenn diese verfügbar ist. Beispielsweise könnten die Behandlungseinheiten 1a, 1b für einen ersten Behandlungsschritt vorgesehen sein und die Behandlungseinheiten 2a, 2b stromabwärts für einen zweiten Behandlungsschritt. Ebenso könnten die Behandlungseinheit 1a, 1b, 2a, 2b alle für den gleichen Behandlungsschritt vorgesehen sein. Es werden dann vorzugsweise identische Verteilmodule 41, 42 verwendet, um die Modularität der Produktionsanlage weiter zu verbessern.

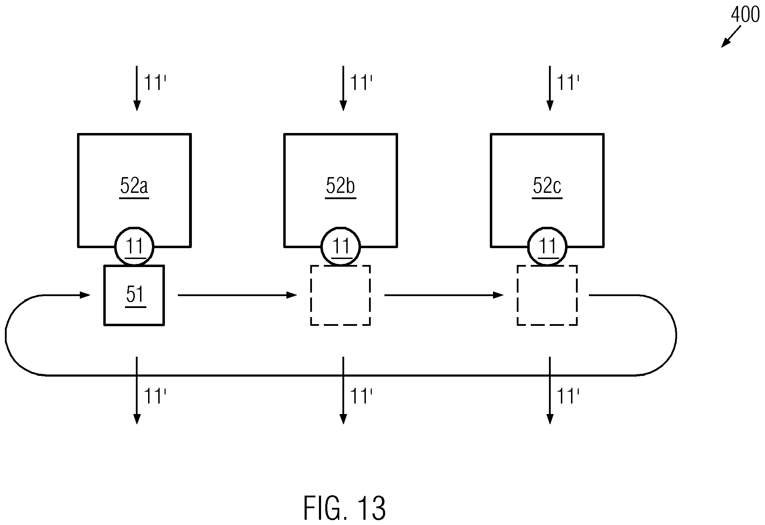

Eine weitere Möglichkeit zur besseren Kapazitätsauslastung der erfindungsgemäßen Produktionsanlage liegt in einer Kombination stationärer Behandlungseinheiten mit vergleichsweise langer Arbeitsprozessdauer mit wenigstens einem mobilen Arbeitsmodul für einen vergleichsweise kürzeren Prozess. Dies ist in der Fig. 13 schematisch anhand einer weiteren Ausführungsform 400 der erfindungsgemäßen Produktionsanlage angedeutet. Beispielsweise ist ein mobiles Arbeitsmodul 51 derart ausgebildet, dass es an die in stationären Behandlungseinheiten 52a, 52b, 52c positionierten Behälter 11 herangefahren werden kann, um den kürzeren Prozess während des längeren Prozesses auszuführen. Hierbei ist es insbesondere wünschenswert, das mobile Arbeitsmodul 51 wenigstens zwei stationären Behandlungseinheiten 52a, 52b, 52c nacheinander zuzuordnen. Dadurch kann die Anzahl der benötigten Aggregate für den kürzeren Prozess reduziert werden, ebenso der dafür benötigte Bauraum.

Hierfür ist es erforderlich, dass die Prozesse der stationären Behandlungseinheit 52a, 52b, 52c und des mobilen Arbeitsmoduls 51 an unterschiedlichen Behälterabschnitten ausgeführt werden, so dass sich die Arbeitsprozesse nicht gegenseitig behindern.

Denkbar ist beispielsweise eine sukzessive Etikettierung oder ein Bedrucken mehrerer Behälter 11 mit einem mobilen Arbeitsmodul während die Behälter 11 an je einem Füllventil positioniert befüllt werden.

Die beschriebenen Ausführungsformen lasen sich aufgrund der Modularität und einheitlicher Übergabeschnittstellen besonders einfach miteinander kombinieren und/oder austauschen. Insbesondere ermöglichen die Verteilmodule eine flexible Kapazitätsauslastung bei Kombination von Behandlungseinheit mit unterschiedlich langer Arbeitsprozessdauer.

## Patentansprüche

1. Produktionsanlage (100) zum Herstellen und/oder Abfüllen von Behältern (11), insbesondere von Getränkeflaschen, mit modularen Behandlungseinheiten (1, 2, 3), die jeweils umfassen:
- ein einzelnes stationäres Arbeitsmodul (13) zum Herstellen oder Behandeln der Behälter derart, dass die Behälter während ihrer Bearbeitung nicht entlang eines Teilkreises umlaufen; und
- Handhabungseinrichtungen (12, 14) zum Handhaben der Behälter zwischen einem Behältereingang der Behandlungseinheit und einem Behälterausgang der Behandlungseinheit und zum Positionieren der Behälter im Arbeitsmodul,
wobei wenigstens zwei gleichartige Behandlungseinheiten (4a - 4d, 5a - 5d) vorgesehen sind, auf die sich die Behälter gezielt verteilen lassen,
wobei eine eingangsseitige Handhabungseinrichtung (12) zum Übernehmen der Behälter (11) an einer eingangsseitigen Übergabeschnittstelle (7) und zum Einsetzen der Behälter in das Arbeitsmodul (13) vorgesehen ist sowie eine ausgangsseitige Handhabungseinrichtung (14) zum Entnehmen der Behälter aus dem Arbeitsmodul und zum Übergeben der Behälter an einer ausgangsseitigen Übergabeschnittstelle (8),
und ferner mit wenigstens einem zwischen Behandlungseinheiten (1a, 1b, 2, 3a - 3d, 5a-5d, 6) für unterschiedliche Arbeitsschritte vorgesehenen Verteilmodul (31, 32, 33), mit dem sich ein von den Behältern (11) gebildeter Produktstrom auf wenigstens zwei Teilproduktströme verteilen lässt oder wenigstens zwei von den Behältern (11) gebildete Teilproduktströme zusammen führen lassen, wobei das wenigstens eine Verteilmodul (31, 32, 33) zur flexiblen Kapazitätsauslastung bei Kombination von Behandlungseinheiten (1a, 1b, 2, 3a-3d, 4a-4d, 5a-5d, 6) mit unterschiedlich langer Arbeitsprozessdauer ausgebildet ist, sodass die Behälter (11) aus einer Behandlungseinheit (2) für einen ersten Arbeitsschritt mit einer ersten Arbeitsprozessdauer auf mehrere Behandlungseinheiten (3a-3d) für einen zweiten Arbeitsschritt mit einer zweiten, demgegenüber längeren Arbeitsprozessdauer verteilt werden und/oder umgekehrt.

2. Produktionsanlage nach Anspruch 1, wobei die eingangsseitigen und ausgangsseitigen Handhabungseinrichtungen (12, 14) als getaktete Greifeinheiten ausgebildet sind, die sich jeweils zwischen einer Greifposition (17) im Bereich des Arbeitsmoduls (13) und einer eingangsseitigen Greifposition (15) oder einer ausgangsseitigen Greifposition (16) bewegen lassen.

3. Produktionsanlage nach Anspruch 2, die ferner derart ausgebildet ist, dass die eingangsseitigen und ausgangsseitigen Greifpositionen (15, 16) Behälterpositionen an Übergabeschnittstellen zwischen benachbarten Behandlungseinheiten (2, 3a - 3d, 5a-5d, 6) oder zum Verteilmodul (32, 33) festlegen.

4. Produktionsanlage (100) zum Herstellen und/oder Abfüllen von Behältern (11), insbesondere von Getränkeflaschen, mit modularen Behandlungseinheiten (21, 21a - 21d), die jeweils umfassen:
- ein einzelnes stationäres Arbeitsmodul (23, 29, 30) zum Herstellen oder Behandeln der Behälter derart, dass die Behälter während ihrer Bearbeitung nicht entlang eines Teilkreises umlaufen; und
- Handhabungseinrichtungen (22, 24) zum Handhaben der Behälter zwischen einem Behältereingang der Behandlungseinheit und einem Behälterausgang der Behandlungseinheit und zum Positionieren der Behälter im Arbeitsmodul,
wobei wenigstens zwei gleichartige Behandlungseinheiten (4a - 4d, 5a - 5d) vorgesehen sind, auf die sich die Behälter gezielt verteilen lassen,
wobei eine schienenförmige Handhabungseinrichtung (22) vorgesehen ist, die sich von einer Schnittstelle am Behältereingang zu einer Schnittstelle am Behälterausgang erstreckt, und wobei der Behandlungseinheit (21) wenigstens eine einzeln angetriebene Handhabungseinrichtung (24) zugeordnet ist, die sich entlang der schienenförmigen Handhabungseinrichtung geführt bewegen lässt und mit der sich der Behälter (11), insbesondere während der geführten Bewegung, im Arbeitsmodul (23, 29, 30) positionieren lässt,
und ferner mit wenigstens einem zwischen Behandlungseinheiten (1a, 1b, 2, 3a - 3d, 5a-5d, 6) für unterschiedliche Arbeitsschritte vorgesehenen Verteilmodul (31, 32, 33), mit dem sich ein von den Behältern (11) gebildeter Produktstrom auf wenigstens zwei Teilproduktströme verteilen lässt oder wenigstens zwei von den Behältern (11) gebildete Teilproduktströme zusammen führen lassen, wobei das wenigstens eine Verteilmodul (31, 32, 33) zur flexiblen Kapazitätsauslastung bei Kombination von Behandlungseinheiten (1a, 1b, 2, 3a-3d, 4a-4d, 5a-5d, 6) mit unterschiedlich langer Arbeitsprozessdauer ausgebildet ist, sodass die Behälter (11) aus einer Behandlungseinheit (2) für einen ersten Arbeitsschritt mit einer ersten Arbeitsprozessdauer auf mehrere Behandlungseinheiten (3a-3d) für einen zweiten Arbeitsschritt mit einer zweiten, demgegenüber längeren Arbeitsprozessdauer verteilt werden und/oder umgekehrt.

5. Produktionsanlage nach Anspruch 4, wobei die einzeln angetriebenen Handhabungseinrichtungen (24) Greifeinheiten mit Greifarmen (27) mit variabler Länge umfassen, die insbesondere schwenkbar gelagert sind.

6. Produktionsanlage nach Anspruch 5, wobei an den Greifarmen (27) Greifer (28) schwenkbar gelagert sind, insbesondere derart, dass sich die Greifarme und die Greifer getrennt voneinander um zueinander parallele Drehachsen schwenken lassen.

7. Produktionsanlage nach einem der Ansprüche 5 bis 6, wobei die Greifeinheiten Greifer (28) zum formschlüssigen Greifen eines Halsbereichs der Behälter (11) umfassen, insbesondere derart, dass der gehaltene Behälter um seine Längsachse in dem Greifer drehbar gelagert ist.

8. Produktionsanlage nach Anspruch 4 oder 5, wobei die schienenförmigen Handhabungseinrichtungen (22) im Bereich der Arbeitsmodule (23) kurvenförmig ausgebildet sind.

9. Produktionsanlage nach Anspruch 1 oder 4, wobei auf dem Verteilmodul (32) zwei separat angetriebene Transportmittel (34, 35) mit jeweils wenigstens einer daran befestigten Reihe von Greifern (38, 39) zum Übernehmen und Übergeben der Behälter (11) vorgesehen sind, und wobei sich mit den Greifern beider Transportmittel identische Schnittstellenpositionen (9, 10a - 10d) zum Übernehmen/Übergeben von/an die Behandlungseinheiten (2, 3a - 3d) anfahren lassen.

10. Produktionsanlage nach Anspruch 1, 4 oder 9, wobei auf dem Verteilmodul (32) zwei umlaufende Transportmittel (34, 35) mit jeweils wenigstens einer daran befestigten Reihe von Greifern (38, 39) zum Übernehmen/Übergeben der Behälter (11) vorgesehen sind, und wobei jeweils ein eingangsseitiges Trum (34a) der Transportmittel und ein ausgangsseitiges Trum (34b) der Transportmittel derart übereinander liegend vorgesehen sind, dass sich die Reihen von Greifern (38, 39) nacheinander an identische Schnittstellenpositionen (9, 10a - 10d) bewegen lassen.

11. Produktionsanlage nach einem der vorigen Ansprüche, wobei das Verteilmodul (32) zum Verteilen oder Zusammenführen der Behälter (11) in einer Nebentransportrichtung (11") quer zur Haupttransportrichtung (11') der Behälter (11) durch die Produktionsanlage ausgebildet ist.

12. Produktionsanlage nach Anspruch 11, wobei die Behandlungseinheiten (1a, 1b, 2, 3a-3d, 4a-4d, 5a-5d, 6) linear angeordnet sind und die Nebentransportrichtung (11") orthogonal, insbesondere in seitlicher Richtung, zur Haupttransportrichtung (11') der Behälter (11) ist.

13. Produktionsanlage nach einem der vorigen Ansprüche, wobei die Verteilmodule (31, 32, 33) an Schnittstellen angeordnet sind, an denen sich die Anzahl parallel geschalteter Behandlungseinheiten (1a, 1b, 3a-3d, 4a-4d, 5a-5d) ändert.

14. Produktionsanlage (400) nach einem der vorigen Ansprüche, ferner mit einem mobilen Arbeitsmodul (51) für einen ersten Arbeitsschritt mit einer vorgegebenen Arbeitsprozessdauer, das sich nacheinander an Behandlungseinheiten (52a, 52b, 52c) für einen zweiten Arbeitsschritt mit demgegenüber längerer Arbeitsprozessdauer ankoppeln lässt, um den ersten Arbeitsschritt während des zweiten Arbeitsschritts nacheinander an wenigstens zwei Behältern (11) auszuführen.

15. Verfahren zum Herstellen und/oder Abfüllen von Behältern, insbesondere von Getränkeflaschen, in der Produktionsanlage (200) nach einem der vorigen Ansprüche, wobei die Behälter (11) aus einer Behandlungseinheit (2) für einen ersten Arbeitsschritt mit einer ersten Arbeitsprozessdauer auf mehrere Behandlungseinheiten (3a - 3d) für einen zweiten Arbeitsschritt mit einer zweiten, demgegenüber längeren Arbeitsprozessdauer verteilt werden.

16. Verfahren nach Anspruch 15, wobei wenigstens eine erste Behandlungseinheit (1a, 1b) für den ersten Arbeitsschritt mit einer ersten Arbeitsprozessdauer vorgesehen ist und wenigstens eine zweite, insbesondere parallel dazu geschaltete Behandlungseinheit (1c, 1d) für den ersten Arbeitsschritt mit einer zweiten Arbeitsprozessdauer, die länger ist als die erste Arbeitsprozessdauer, und wobei die Behälter auf die Behandlungseinheiten (2a - 2h) für den zweiten Arbeitsschritt nach Prozessdauer gewichtet verteilt werden, um die Auslastung der Behandlungseinheiten für den zweiten Arbeitsschritt aneinander anzugleichen.

17. Verfahren nach Anspruch 16, wobei die erste Behandlungseinheit (1a, 1b) im ersten Arbeitsschritt pro Zeiteinheit mehr Behälter behandelt und auf die nachfolgenden Behandlungseinheiten (2a - 2h) für den zweiten Arbeitsschritt verteilt als die zweite Behandlungseinheit (1c, 1d) im ersten Arbeitsschritt.

18. Verfahren nach Anspruch 16 oder 17, wobei die Gewichtung der Behälterverteilung produktabhängig angepasst wird.

19. Verfahren nach einem der Ansprüche 16 bis 18, wobei Produktströme der Behälter (11) bei einem Übergang von vergleichsweise langsamen Prozessen zu vergleichsweise schnellen Prozessen, die eine geringere Anzahl von Behandlungseinheiten erfordern, zusammengefasst werden, indem die Behälter vorrangig einer Behandlungseinheit zugeführt werden, die den jeweiligen Arbeitsprozess vergleichsweise schnell durchführen kann.

20. Verfahren nach einem der Ansprüche 16 bis 19, wobei die Verteilung der Behälter auf parallel geschaltete Behandlungseinheiten auf Anforderung jeweils freier Behandlungseinheiten spontan festgelegt wird.

21. Verfahren nach Anspruch 20, wobei der zugeordnete Behandlungsprozess keine feste Behandlungszeit aufweist, sondern so lange ausgeführt werden muss, bis ein Inspektionsergebnis des Behandlungsprozesses in Ordnung ist.

## Claims

1. Production system (100) for producing and/or filling containers (11), in particular beverage bottles, with modular processing units (1, 2, 3), each comprising:
- a single stationary operating module (13) for producing or processing said containers such that the containers during treatment do not circulate along a pitch circle; and
- handling devices (12, 14, 22, 24) for handling said containers between a container entry of said processing unit and a container exit of said processing unit and for positioning said containers in said operating module,
where at least two processing units (4a - 4d, 5a - 5d) of the same kind are provided to which said containers can be specifically distributed,
where a handling device (12) at the entry side is provided for receiving said containers (11) at a transfer interface (7) at the entry side and for inserting said containers into said operating module (13) as well as a handling device (14) at the exit side for removing said containers from said operating module and for transferring said containers at a transfer interface (8) at the exit side,
furthermore with at least one distribution module (31, 32, 33) arranged between processing units (1a, 1b, 2, 3a - 3d, 5a-5d, 6) provided for different work steps, with which a product flow formed by said containers (11) can be distributed to at least two partial product flows or at least two partial product flows formed by said containers (11) can be merged, wherein the at least one distribution module (31, 32, 33) is configured for a flexible capacity utilization in combination with processing units (1a, 1b, 2, 3a - 3d, 5a-5d, 6) with work process periods of different length such that said containers (11) are distributed from a processing unit (2) for a first work step with a first work process period to multiple processing units (3a - 3d) for a second work step with a second work process period that is longer as compared thereto, and/or vice versa.

2. Production system according to claim 1, where said handling devices (12, 14) are configured as clocked gripping units which can each be moved between a gripping position (17) in the region of said operating module (13) and a gripping position (15) at the entry side or a gripping position (16) at the exit side.

3. Production system according to claim 2, further being configured such that the gripping positions (15, 16) at the entry side and the exit side define container positions at transfer interfaces between adjacent processing units (2, 3a - 3d, 5a-5d, 6) or relative to the distribution module (32, 33).

4. Production system (100) for producing and/or filling containers (11), in particular beverage bottles, with modular processing units (21, 21a - 21d), each comprising:
- a single stationary operating module (23, 29, 30) for producing or processing said containers such that the containers during treatment do not circulate along a pitch circle; and
- handling devices (22, 24) for handling said containers between a container entry of said processing unit and a container exit of said processing unit and for positioning said containers in said operating module,
where at least two processing units (4a - 4d, 5a - 5d) of the same kind are provided to which said containers can be specifically distributed,
where a rail-like handling device (22) is provided extending from said container entry to said container exit, and where said processing unit (21) is associated with at least one separately driven handling device (24) which can be moved along said rail-like handling device in a guided manner and with which said container (11) can be positioned in said operating module (23, 29) in particular during the guided motion,
furthermore with at least one distribution module (31, 32, 33) arranged between processing units (1a, 1b, 2, 3a - 3d, 5a-5d, 6) provided for different work steps, with which a product flow formed by said containers (11) can be distributed to at least two partial product flows or at least two partial product flows formed by said containers (11) can be merged, wherein the at least one distribution module (31, 32, 33) is configured for a flexible capacity utilization in combination with processing units (1a, 1b, 2, 3a - 3d, 5a-5d, 6) with work process periods of different length such that said containers (11) are distributed from a processing unit (2) for a first work step with a first work process period to multiple processing units (3a - 3d) for a second work step with a second work process period that is longer as compared thereto, and/or vice versa.

5. Production system according to claim 4, where said individually driven handling devices (24) comprise gripping units with gripping arms (27) of variable length that are in particular pivotably mounted.

6. Production system according to claim 5, where grippers (28) are mounted pivotably on said gripping arms (27), in particular such that said gripping arms and said grippers can be pivoted separately about axes of rotation that are parallel to each other.

7. Production system according to one of the claims 5 to 6, where said gripping units comprise grippers (28) for positive-fit gripping of a neck portion of said containers (11), in particular such that said container being held is mounted rotatable about its longitudinal axis in said gripper.

8. Production system according to claim 4 or 5, where said rail-like handling devices (22) are in the region of said operating modules (23) formed curve-like.

9. Production system according to claim 1 or 4, where two separately driven transport devices (34, 35), each having at least one row of grippers (38, 39) attached thereto for receiving and transferring said containers (11), are provided on said distribution module (32), and where said grippers of said two transport devices can be moved to identical interface positions (9, 10a - 10d) for reception/transfer from/to said processing units (2, 3a - 3d).

10. Production system according to claim 1, 4 or 9, where two circulating transport devices (34, 35), each having at least one row of grippers (38, 39) attached thereto for receiving/transferring said containers (11), are provided on said distribution module (32), and where a respective run (34a) on the entry side of said transport devices and a respective run (34b) on the exit side of said transport devices are provided disposed one above the other such that the rows of grippers (38, 39) can successively be moved to identical interface positions (9, 10a - 10d).

11. Production system according to at least one of the preceding claims, where the distribution module (32) is configured for distributing or merging the containers (11) in a secondary direction of transport (11") transverse to the main direction of transport (11') of the containers (11) through the production system.

12. Production system according to claim 11, where the processing units (1a, 1b, 2, 3a-3d, 5a-5d, 6) have a linear arrangement and the secondary direction of transport (11") is, in particular in the lateral direction, orthogonal to the main direction of transport (11') of the containers (11).

13. Production system according to at least one of the preceding claims, where the distribution modules (31, 32, 33) are provided at interfaces where the number of processing units (1a, 1b, 3a - 3d, 5a-5d) connected in paralleled changes.

14. Production system (400) according to at least one of the preceding claims, furthermore with a mobile operating module (51) for a first work step with a predetermined work process period that can be consecutively coupled to processing units (52a, 52b, 52c) for a second work step with a longer work process period as compared thereto, in order to perform said first work step during said second work step consecutively for at least two containers (11).

15. Method for producing and/or filling containers, in particular beverage bottles, in said production system (200) according to at least one of the preceding claims, wherein said containers (11) are distributed from a processing unit (2) for a first work step with a first work process period to multiple processing units (3a - 3d) for a second work step with a second work process period that is longer as compared thereto.

16. Method according to claim 15, where at least one first processing unit (1a, 1b) is provided for said first work step with a first work process period and at least one second processing unit (1c, 1d), in particular connected parallel thereto, for said first work step with a second work process period that is longer than the first work process period, and where said containers are then for said second work step in a weighted manner depending on the process period distributed to said processing units (2a - 2h) to equalize the degree of capacity utilization of said processing units for said second work step.

17. Method according to claim 16, where the first processing unit (1a, 1b) processes more containers per unit time in the first work step and distributes the containers to the subsequent processing units (2a - 2h) for the second work step, than the second processing unit (1c, 1d) in the first work step.

18. Method according to claim 16 or 17, where the weighting of distributing the containers is adapted depending on the product.

19. Method according to one of claims 16 to 18, where product flows of the containers (11) in a transition from relatively slow processes to relatively fast processes that require a smaller number of processing units, are merged by preferentially feeding the containers to a processing unit that can perform the respective work process comparatively fast.

20. Method according to one of claims 16 to 19, where the distribution of the containers to processing units connected in parallel is determined spontaneously upon demand from respectively free processing units.

21. Method according to claim 20, where the assigned treatment process has no fixed processing period but must be performed until an inspection result of the treatment process is satisfactory.

## Revendications

1. Dispositif de production (100) pour la fabrication et/ou le remplissage de récipients (11), en particulier de bouteilles de boissons, avec des unités de traitement modulaires (1, 2, 3), comprenant chacune:
- un seul module de traitement fixe (13) pour la production ou le traitement des récipients de telle sorte que les récipients ne tournent pas sur un cercle primitif pendant leur traitement
- des équipements de manutention (12, 14) pour la manutention des récipients entre une entrée de récipients de l'unité de traitement et une sortie de récipients de l'unité de traitement et pour le positionnement des récipients dans le module de traitement,
dans lequel sont prévues au moins deux unités de traitement (4a - 4d, 5a - 5d) du même type, sur lesquelles les récipients peuvent être répartis de manière ciblée,
dans lequel un dispositif de manutention côté entrée (12) conçu pour recevoir les récipients (11) est prévu au niveau d'une interface de transfert côté entrée (7) et à insérer les récipients dans le module de traitement (13), et un équipement de manutention côté sortie (14) conçu pour retirer les récipients du module de traitement et pour transférer les récipients au niveau d'une interface de transfert côté sortie (8),
et en outre avec au moins un module de distribution (31, 32, 33) prévu entre les unités de traitement (1a, 1b, 2, 3a - 3d, 5a - 5d, 6) pour différentes étapes de traitement, avec lequel un flux de produit formé par les récipients (11) peut être distribué vers au moins deux flux de produit partiels ou au moins deux flux de produit partiels formés par les récipients (11) peuvent être réunis, ledit au moins un module de distribution (31, 32, 33) étant prévu pour une utilisation flexible des capacités dans le cas de combinaisons d'unités de traitement (1a, 1b, 2, 3a-3d, 4a-4d, 5a-5d, 6) avec des durées de traitement différentes, de sorte que les récipients (11) sont répartis d'une unité de traitement (2) pour une première étape de traitement avec une première durée de traitement à plusieurs unités de traitement (3a-3d) pour une seconde étape de traitement avec une seconde durée de traitement plus longue en comparaison et/ou vice versa.

2. Dispositif de production selon la revendication 1, dans laquelle les équipements de manutention (12, 14) côté entrée et côté sortie sont conçus comme des unités de préhension cadencées qui peuvent être déplacées chacune entre une position de préhension (17) dans la zone du module de traitement (13) et une position de préhension (15) côté entrée ou une position de préhension (16) côté sortie.

3. Dispositif de production selon la revendication 2, qui est en outre conçue de telle sorte que les positions de préhension côté entrée et côté sortie (15, 16) définissent les positions des récipients aux interfaces de transfert entre des unités de manutention adjacentes (2, 3a - 3d, 5a-5d, 6) ou vers le module de distribution (32, 33).

4. Dispositif de production (100) pour la fabrication et/ou le remplissage de récipients (11), en particulier de bouteilles de boissons, avec des unités de traitement modulaires (21, 21a-21d), comprenant chacune:
- un seul module de traitement fixe (23, 29, 30) pour produire ou traiter les récipients de manière à ce que les récipients ne tournent pas sur un cercle partiel pendant leur traitement,
- des équipements de manutention (22, 24) pour la manutention des récipients entre une entrée de récipients de l'unité de traitement et une sortie de récipients de l'unité de traitement et pour le positionnement des récipients dans le module de traitement,
dans lequel sont prévues au moins deux unités de traitement (4a - 4d, 5a - 5d) du même type, sur lesquelles les récipients peuvent être répartis de manière ciblée,
dans lequel il est prévu un dispositif de manutention (22) en forme de rail, qui s'étend d'une interface à l'entrée du récipient à une interface à la sortie du récipient, et dans lequel au moins un dispositif de manutention (24) entraîné individuellement est associé à l'unité de traitement (21), qui peut être déplacé de manière guidée le long du dispositif de manutention en forme de rail et avec lequel le récipient (11) peut être positionné dans le module de traitement (23, 29, 30), en particulier pendant le mouvement guidé, et en outre avec au moins un module de distribution (31, 32, 33) prévu entre les unités de traitement (1a, 1b, 2, 3a-3d, 5a-5d, 6) pour différentes étapes de traitement, au moyen duquel un flux de produits formé par les récipients (11) peut être distribué vers au moins deux flux de produits partiels ou au moins deux flux de produits partiels formés par les récipients (11) peuvent être réunis, le au moins un module de distribution (31, 32, 33) pouvant être utilisé pour une utilisation flexible des capacités lors de la combinaison d'unités de traitement (1a, 1b, 2, 3a-3d, 4a-4d), 5a-5d, 6) est formé avec des durées de traitement différentes, de sorte que les récipients (11) sont répartis d'une unité de traitement (2) pour une première étape de traitement avec une première durée de traitement à plusieurs unités de traitement (3a-3d) pour une seconde étape de traitement avec une seconde durée de traitement, par contre plus longue, et/ou vice versa.

5. Dispositif de production selon la revendication 4, dans lequel les équipements de manutention (24) entraînés individuellement comprennent des unités de préhension avec des bras de préhension (27) de longueur variable, qui sont notamment montés de manière pivotante.

6. Dispositif de production selon la revendication 5, dans lequel des pinces (28) sont montées de manière pivotante sur les bras de préhension (27), en particulier de telle sorte que les bras de préhension et les pinces peuvent être pivotés séparément les uns des autres autour d'axes de rotation parallèles entre eux.

7. Dispositif de production selon l'une des revendications 5 à 6, dans lequel les unités de préhension comprennent des pinces (28) pour la préhension positive d'une zone du goulot des récipients (11), en particulier de telle sorte que le récipient tenu est monté dans la pince de manière à pouvoir tourner autour de son axe longitudinal.

8. Dispositif de production selon les revendications 4 ou 5, dans lequel les dispositifs de manutention en forme de rail (22) sont courbés dans la zone des modules de traitement (23).

9. Dispositif de production selon les revendications 1 ou 4, dans lequel deux moyens de transport (34, 35) entraînés séparément et comportant chacun au moins une rangée de pinces (38, 39) sont prévus sur le module de distribution (32) pour la prise en charge et le transfert des récipients (11), et dans lequel des positions d'interface identiques (9, 10a - 10d) pour la prise en charge/le transfert depuis/vers les unités de traitement (2, 3a - 3d) peuvent être approchées avec les pinces des deux moyens de transport.

10. Dispositif de production selon les revendications 1, 4 ou 9, dans lequel il est prévu sur le module de distribution (32) deux moyens de transport (34, 35) circulant en circuit fermé et comportant chacun au moins une rangée de pinces (38, 39) qui y sont fixées, pour la réception/transfert des récipients (11), et dans laquelle il est prévu respectivement un brin (34a) côté entrée des moyens de transport et un brin (34b) côté sortie des moyens de transport, superposés de telle sorte que les rangées de pinces (38, 39) peuvent être déplacées l'une après l'autre dans des positions d'interface identiques (9, 10a - 10d).

11. Dispositif de production selon l'une des revendications précédentes, dans lequel le module de distribution (32) est conçu pour répartir ou rassembler les récipients (11) dans une direction de transport secondaire (11") transversale à la direction de transport principale (11') des récipients (11) à travers l'dispositif de production.

12. Dispositif de production selon la revendication 11, dans lequel les unités de traitement (1a, 1b, 2, 3a-3d, 4a-4d, 5a-5d, 6) sont disposées de façon linéaire et la direction de transport secondaire (11") est orthogonale, en particulier dans la direction latérale, à la direction de transport principale (11') des récipients (11).

13. Dispositif de production selon l'une des exigences précédentes, dans lequel les modules de distribution (31, 32, 33) sont disposés à des interfaces où change le nombre d'unités de traitement connectées en parallèle (1a, 1b, 3a-3d, 4a-4d, 5a-5d).

14. Dispositif de production (400) selon l'une des revendications précédentes, comprenant en outre un module de traitement mobile (51) pour une première étape de traitement avec une durée de processus de traitement prédéterminée, qui peut être couplé successivement à des unités de traitement (52a, 52b, 52c) pour une seconde étape de traitement avec une durée de processus de traitement plus longue en comparaison, afin d'effectuer successivement la première étape de traitement pendant la seconde étape de traitement sur au moins deux récipients (11).

15. Procédé de fabrication et/ou de remplissage de récipients, en particulier de bouteilles de boissons, dans le dispositif de production (200) selon l'une des revendications précédentes, dans lequel les récipients (11) sont répartis d'une unité de traitement (2) pour une première étape de traitement avec une première durée de processus de traitement à plusieurs unités de traitement (3a - 3d) pour une seconde étape de traitement avec une seconde, par rapport à cette durée de processus de traitement plus longue.

16. Procédé selon la revendication 15, dans lequel au moins une première unité de traitement (1a, 1b) est prévue pour la première étape de traitement avec une première durée de processus de traitement et au moins une seconde unité de traitement (1c, 1d), en particulier montée en parallèle avec celle-ci, pour la première étape de traitement avec une seconde durée de processus de traitement qui est plus longue que la première durée de processus de traitement, et dans lequel les récipients sont répartis sur les unités de traitement (2a - 2h) pour la seconde étape de traitement, pondérés en fonction de la durée de processus, afin d'-égaliser l'utilisation des unités de traitement pour la seconde étape de traitement.

17. Procédé selon la revendication 16, dans lequel la première unité de traitement (1a, 1b) dans la première étape de traitement traite plus de récipients par unité de temps et les répartit vers les unités de traitement suivantes (2a - 2h) pour la seconde étape de traitement que la seconde unité de traitement (1c, 1d) dans la première étape de traitement.

18. Procédé selon les revendications 16 ou 17, dans lequel la pondération de la répartition des récipients est ajustée en fonction du produit.

19. Procédé selon l'une des revendications 16 à 18, selon lequel les flux de produits des récipients (11) sont combinés lors d'une transition de processus relativement lents à des processus relativement rapides qui nécessitent un nombre plus restreint d'unités de traitement, en ce sens que les récipients sont principalement acheminés vers une unité de traitement qui peut effectuer le processus de traitement respectif relativement rapidement.

20. Procédé selon l'une des revendications 16 à 19, dans lequel la répartition des récipients vers les unités de traitement connectées en parallèle est déterminée spontanément sur demande des unités de traitement libres respectives.

21. Procédé selon la revendication 20, dans lequel le processus de traitement associé n'a pas de temps de traitement fixe, mais doit être effectué jusqu'à ce que le processus de traitement donne un résultat d'inspection satisfaisant.
